# EUROPEAN PATENT SPECIFICATION

(11) **EP 1 726 633 B1**
(45) Date of publication and mention of the grant of the patent: **17.12.2008**
(21) Application number: 06010227.4
(22) Date of filing: 18.05.2006
(51) Int. Cl.: C09K 19/30, C09K 19/42, C09K 19/46

(54) **Liquid crystalline medium and liquid crystal display**
Flüssigkristallines Medium und Flüssigkristallanzeige
Milieu liquide cristallin et dispositif d'affichage à base de cristaux liquides

(30) Priority: 25.05.2005 EP 05011326; 13.10.2005 EP 05022352
(43) Date of publication of application: 29.11.2006
(73) Proprietor: Merck Patent GmbH, 64293 Darmstadt (DE)
(72) Inventor: Czanta, Markus, Dr., 64289 Darmstadt (DE); Manabe, Atsutaka, 64625 Bensheim (DE); Lietzau, Lars, Dr., 64295 Darmstadt (DE); Wittek, Michael,Dr., 64285 Darmstadt (DE)

(56) References cited:
- WO-A-20/05017067
- WO-A-20/05123879
- US-A1- 2003 197 153
- US-A1- 2004 108 489

## Description

### Field of the invention

The present invention relates to liquid crystalline media and to liquid crystal displays comprising these media, especially to displays addressed by an active matrix and in particular to displays of the Twisted Nematic (TN) or of the In Plane Switching (IPS) type.

### States the art and problem to be solved

Liquid Crystal Displays (LCDs) are widely used to display information. LCDs are used for direct view displays, as well as for projection type displays. Electro-optical modes employed are e.g. the twisted nematic (TN)-, the super twisted nematic (STN)-, the optically compensated bend (OCB)- and the electrically controlled birefringence (ECB)-mode with their various modifications, as well as others. All these modes use an electrical field, which is substantially perpendicular to the substrates, respectively to the liquid crystal layer. Besides these modes there are also electro-optical modes employing an electrical field substantially parallel to the substrates, respectively the liquid crystal layer, like e.g. the In-Plane Switching mode (as disclosed e.g. in DE 40 00 451 and EP 0 588 568). Especially this electro-optical mode is used for LCDs for modem desktop monitors and is envisaged to be applied for displays for multi media applications. The liquid crystals according to the present invention are preferably used in this type of displays.

For these displays new liquid crystalline media with improved properties are required. Especially the response times have to be improved for many types of applications. Thus liquid crystalline media with lower viscosities (η), especially with lower rotational viscosities (γ₁) are required. The rotational viscosity should be 75 mPa·s or less, preferably 60 mPa·s or less and especially 55 mPa·s or less. Besides this parameter, the media have to exhibit a suitably wide range of the nematic phase, an appropriate birefringence (Δn) and dielectric anisotropy (Δε) should be high enough to allow a reasonably low operation voltage. Preferably Δε should be higher than 4 and very preferably higher than 5, preferably, however, not higher than 15 and in particular not higher than 12, as this would be detrimental for an at least reasonably high specific resistivity.

The displays according to the present invention are preferably addressed by an active matrix (active matrix LCDs, short AMDs), preferably by a matrix of thin film transistors (TFTs). However, the inventive liquid crystals can also beneficially be used in displays with other known addressing means.

There are various different display modes using composite systems of liquid crystal materials of low molecular weight together with polymeric materials. These are e.g. polymer dispersed liquid crystal (PDLC)-, nematic curvi-linearly aligned phase (NCAP)- and polymer network (PN)-systems, as disclosed for example in WO 91/05 029 or axially symmetric microdomain (ASM) systems and others. In contrast to these, the modes especially preferred according to the instant invention are using the liquid crystal medium as such, oriented on surfaces. These surfaces typically are pre-treated to achieve uniform alignment of the liquid crystal material The display modes according to the instant invention preferably use an electrical field substantially parallel to the composite layer.

Liquid crystal compositions suitable for LCDs and especially for IPS displays are known e. g. from JP 07-181 439 (A), EP 0 667 555, EP 0 673 986, DE 195 09 410, DE 195 28 106, DE 195 28 107, WO 96/23 851 and WO 96/28 521. These compositions, however, do have significant drawbacks. Most of them, amongst other deficiencies, lead to unfavourably long response times, have too low values of the resistivity and/or require operation voltages, which are too high.

Liquid crystal compositions comprising a compound of formula I as used for this invention were already mentioned in the documents US 2003/0197153 A1 and WO 2005/017067 A1. A homolog of compound I with a pentyl residue was used for such compositions according to US 2004/0108489 A1.

The intermediate document WO 2005/123879 A1 comprises a compound of formula I in combination with 3 % or 4 % of a fluorinated quaterphenyl.

Thus, there is a significant need for liquid crystalline media with suitable properties for practical applications such as a wide nematic phase range, appropriate optical anisotropy Δn, according to the display mode used, a high Δε and especially low viscosities.

### Present invention

Surprisingly, it now has been found that liquid crystalline media with a suitably high Δε, a suitable phase range, and Δn can be realized, which do not exhibit the drawbacks of the materials of the prior art or at least do exhibit them to a significantly lesser degree.

These improved liquid crystalline media according to the instant application are comprising at least the following components:
- a dielectrically neutral component, component A, comprising a dielectrically neutral compound of formula I and 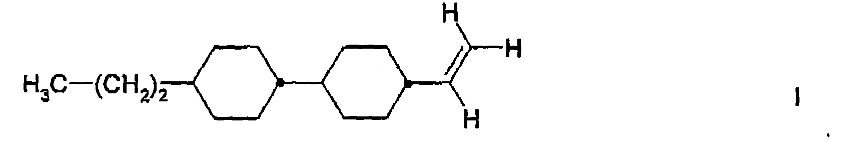
- a dielectrically positive component, component B, comprising one or more dielectrically positive compounds having a dielectric anisotropy of more than 3
and the concentration of the component A in the medium is in the range from 45 % to 60 % and preferably from 50 % to 57 %, with the condition that media comprising 3 % or 4 % of the compound of the formula 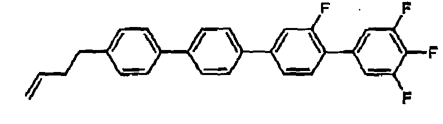 are excluded.

Preferably the dielectrically positive component, component B, comprises, more preferably it consists predominantly of, even more preferably it consists essentially and most preferably it consists entirely of dielectrically positive compounds having a dielectric anisotropy of more than 3.

Preferably this component, component B, comprises, more preferably it consists predominantly of, even more preferably it consists essentially and most preferably it consists entirely of one or more dielectrically positive compounds having a dielectric anisotropy of more than 3, selected from the group of formulae II and III 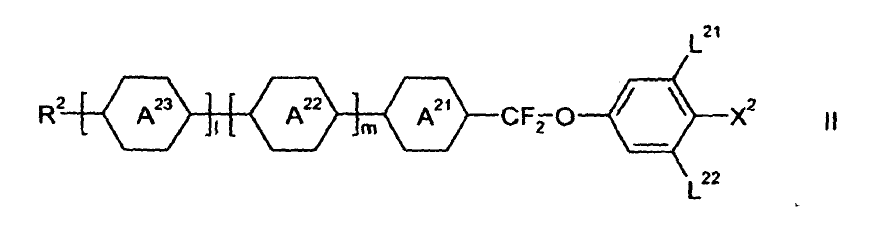 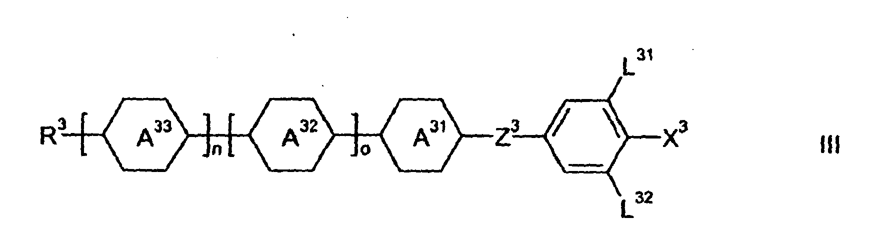 wherein
- R² and R³,: independently of each other, are alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, and R² and R³ preferably are alkyl or alkenyl, 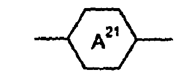 to 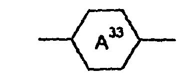 are, independently of each other, 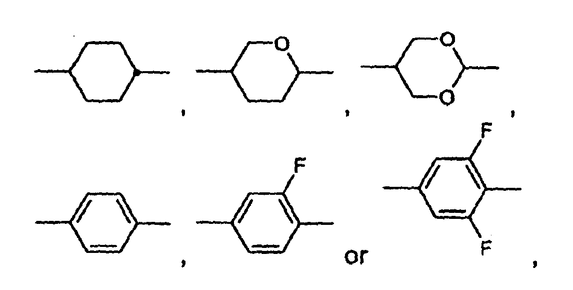
- L²¹, L²², L³¹ and L³²,: are, independently of each other, H or F, preferably L²¹ and/or L³¹ is F,
- X² and X³: are, independently of each other, halogen, halogenated alkyl or alkoxy with 1 to 3 C-atoms or halogenated alkenyl or alkenyloxy wit 2 or 3 C-atoms, preferably F, Cl, -OCF₃ or -CF₃, most preferably F, Cl or -OCF₃,
- Z³: is -CH₂CH₂-, -CF₂CF₂-, -COO-, trans- -CH=CH-, trans--CF=CF-, -CH₂O- or a single bond, preferably -CH₂CH₂-, -COO-, trans- -CH=CH- or a single bond and most preferably -COO-, trans- -CH=CH-, trans- or a single bond,and
- I, m, n and o: are, independently of each other, 0 or 1.

In a preferred embodiment of the present invention component B, comprises, more preferably it consists predominantly of, even more preferably it consists essentially and most preferably it consists entirely of one or more dielectrically positive compounds having a dielectric anisotropy of more than 3, selected from the group of compounds of formulae II-1 and II-2 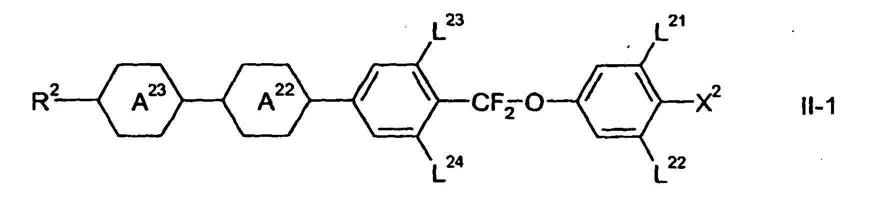 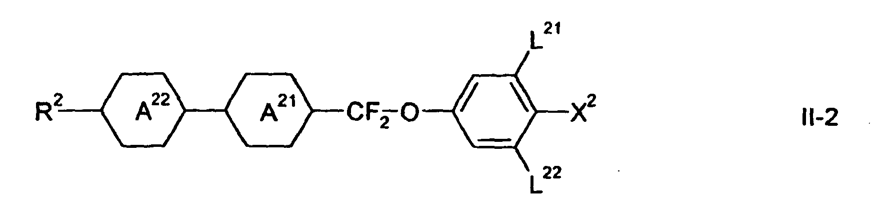 wherein the parameters have the respective meanings given under formula II above and in Formula II-1 and the parameters L²³ and L²⁴ are, independently of each other and of the other parameters, H or F.

Preferably component B comprises compounds selected from the group of compounds of formulae II-1 and II-2, wherein L²¹ and L²² or L³¹ and L³² are both F

In a preferred embodiment component B comprises compounds selected from the group of compounds of formulae II-1 and II-2, wherein L²¹, L²², L³¹ and L³² all are F.

Preferably component B comprises one or more compounds of formula II-1. Preferably the compounds of formula 11-1 are selected from the group of compounds of formulae II-1a to II-1e 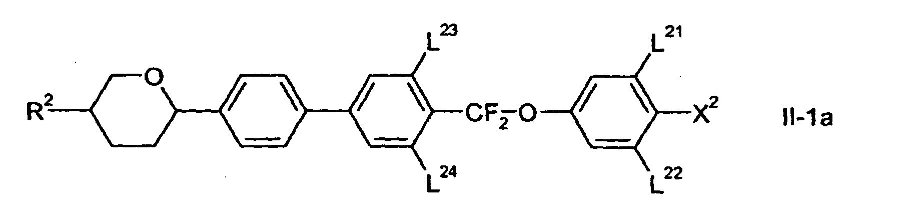 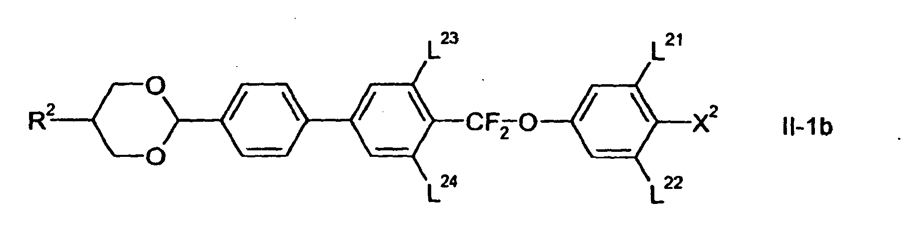 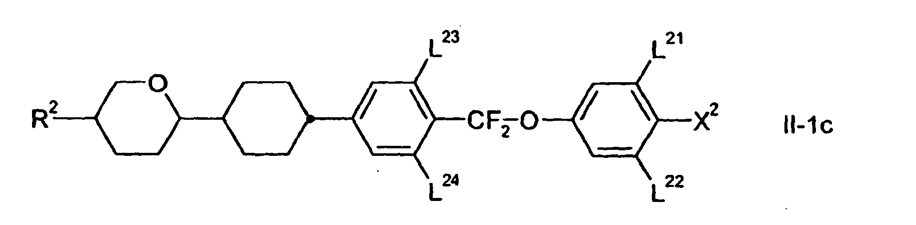 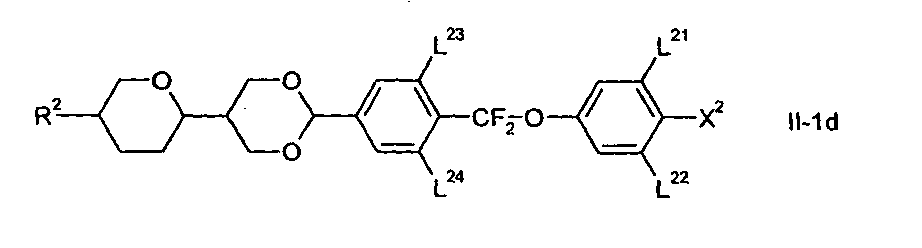 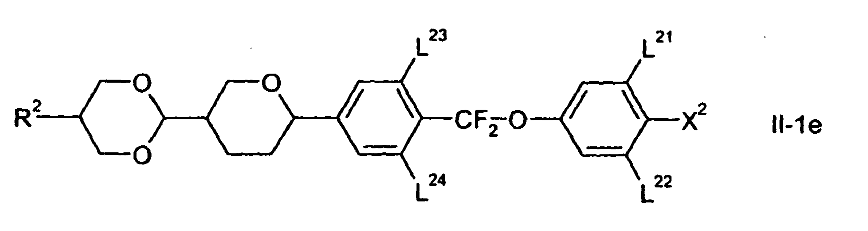 wherein the parameters have the respective meanings given above.

Preferably component B comprises compounds selected from the group of compounds of formulae II-1a to II-1e wherein L²¹ and L²² or L³¹ and L³² are both F

In a preferred embodiment component B comprises compounds selected from the group of compounds of formulae II-1a to II-1e, wherein L²¹, L²², L³¹ and L³² all are F.

Especially preferred compounds of formula II-1 are 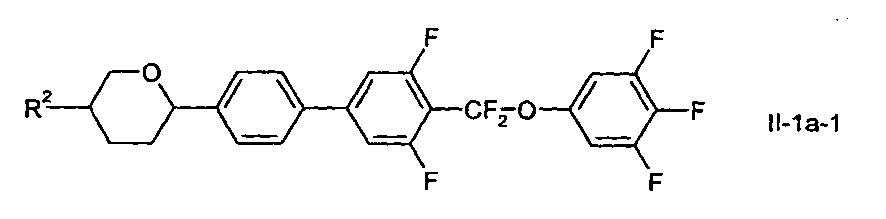 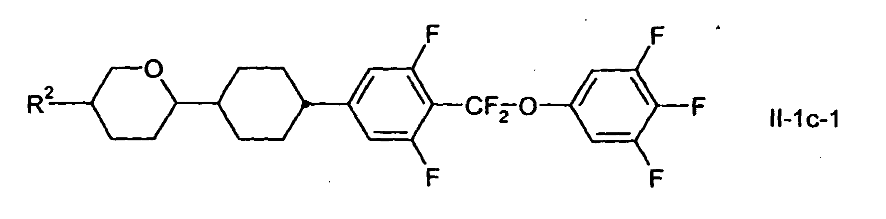 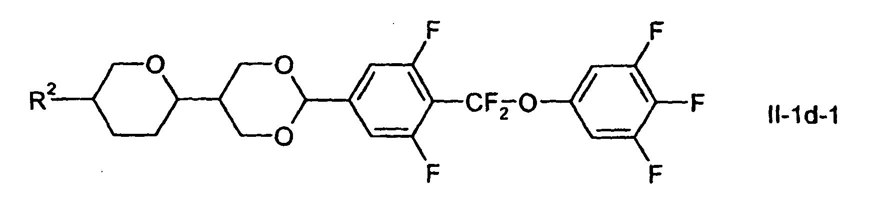 wherein the R² has the meaning given above.

Preferably Component B comprises one or more compounds of formula II-2. Preferably the compound of formula II-2 are selected from the group of compounds of formulae II-2a to II-2d 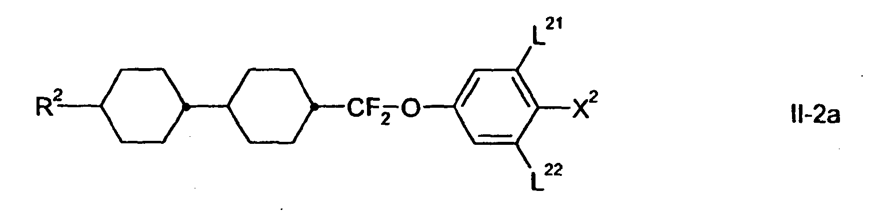 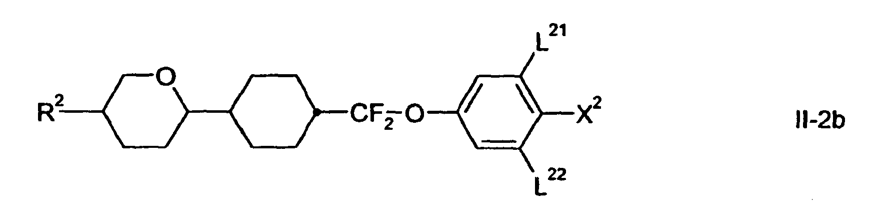 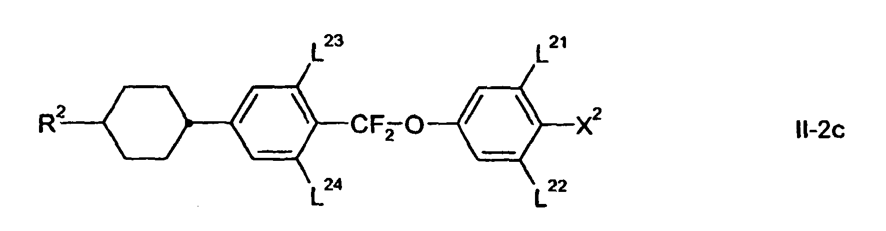 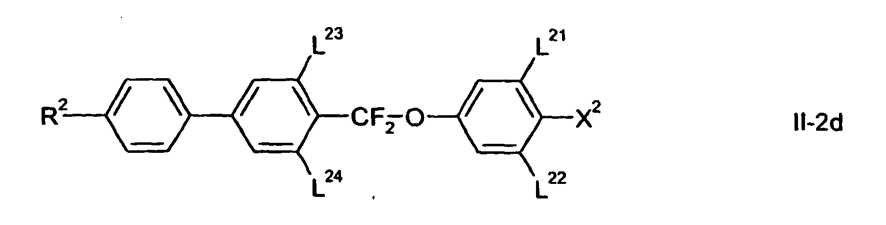 wherein the parameters have the respective meanings given above and preferably
L²¹ and L²² are both F and L³¹ and L³², are both H or
L²¹, L²², L³¹ and L³² are all F

Especially preferred compounds of formula II-2 are 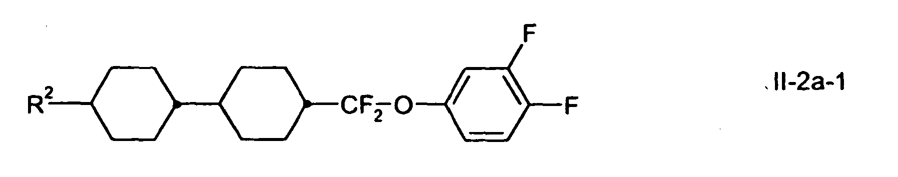 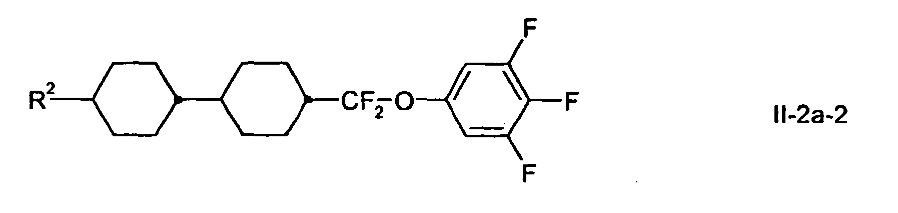 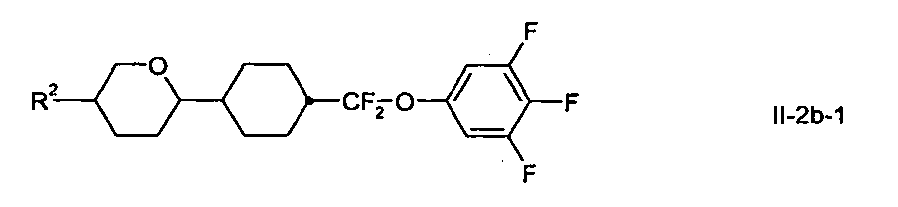 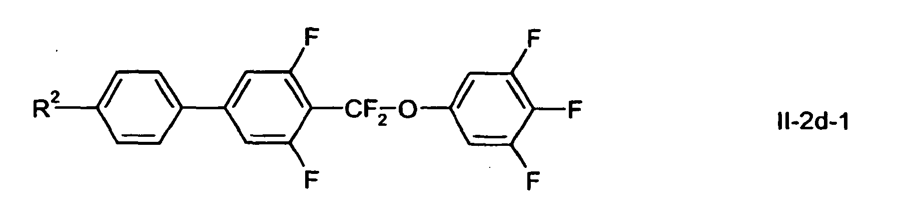 wherein the R² has the meaning given above.

In a further preferred embodiment of the present invention component B, comprises, more preferably it consists predominantly of, even more preferably it consists essentially and most preferably it consists entirely of one or more dielectrically positive compounds having a dielectric anisotropy of more than 3, selected from the group of formulae III-1 and III-2 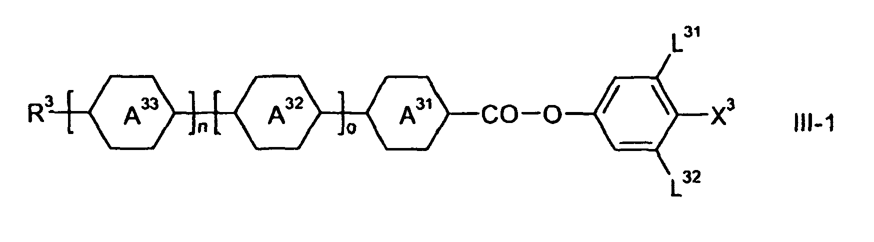 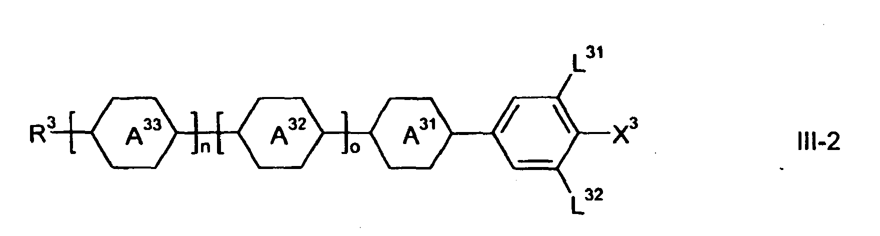 wherein the parameters have the respective meanings given under formula III above.

Preferably component B comprises one or more compounds of formula III-1. Preferably the compounds of formula III-1 are selected from the group of compounds of formulae III-1a and III-1b 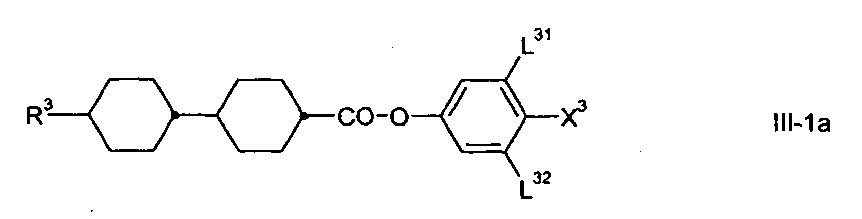 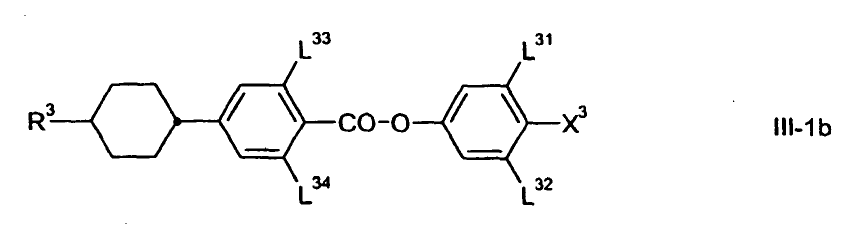 wherein the parameters have the respective meanings given above and the parameters L³³ and L³⁴ are, independently of each other and of the other parameters, H or F.

Preferably component B comprises one or more compounds of formula III-2. Preferably the compounds of formula III-2 are selected from the group of compounds of formulae III-2a to III-2g 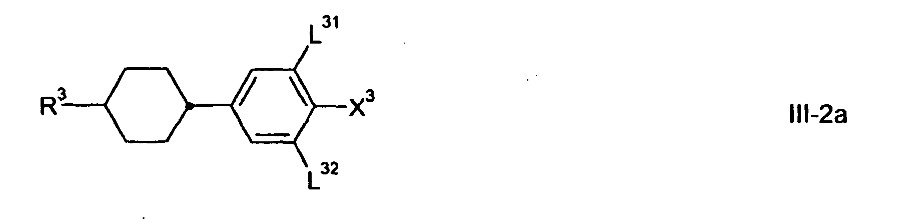 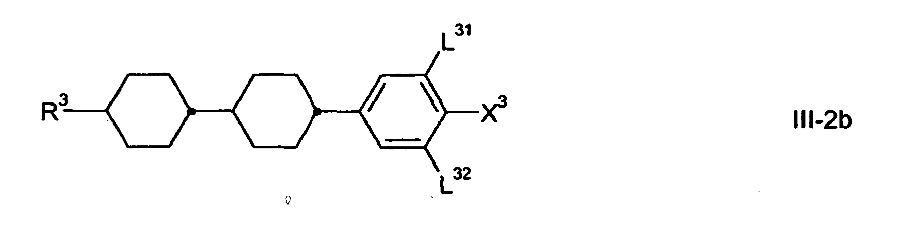 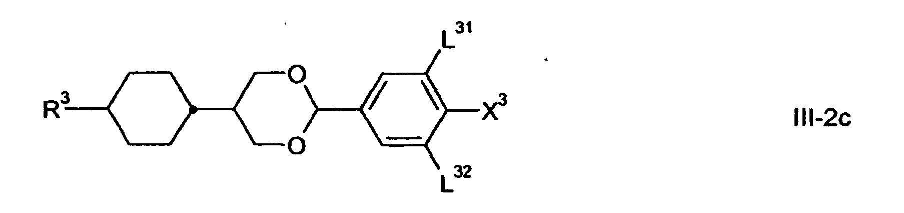 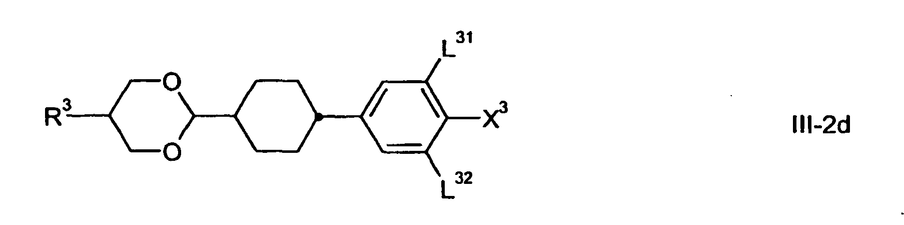 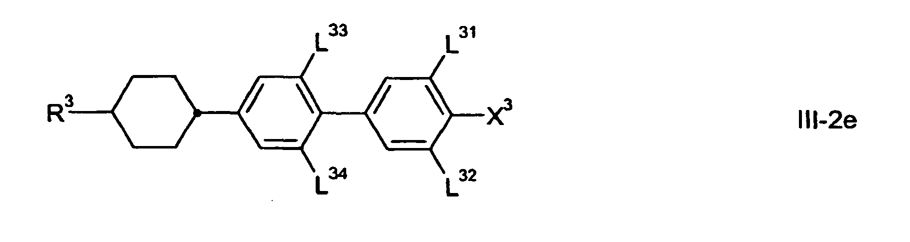 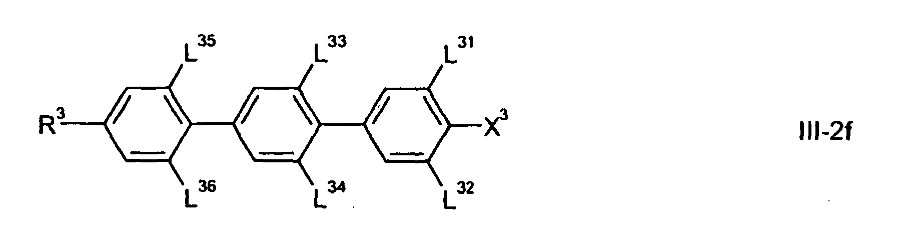 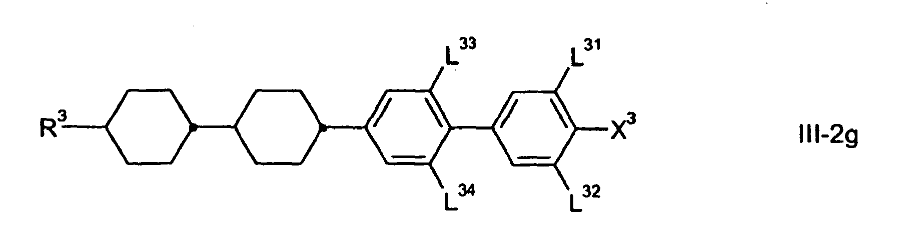 wherein the parameters have the respective meanings given above.

Preferably component B comprises one or more compounds of formula III-1a, which preferably are selected from the group of compounds of formulae III-1a-1 to III-1a-6 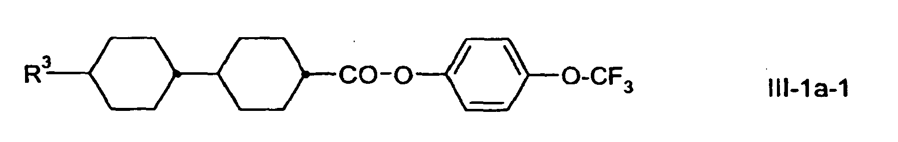 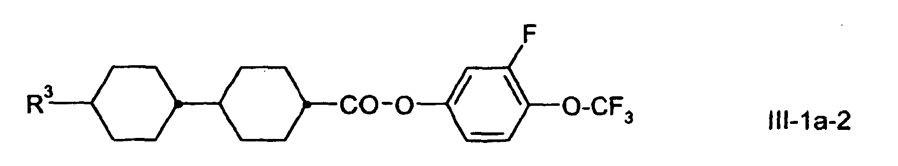 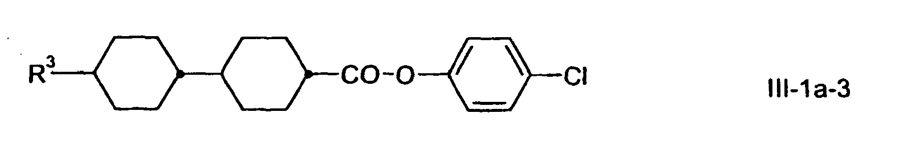 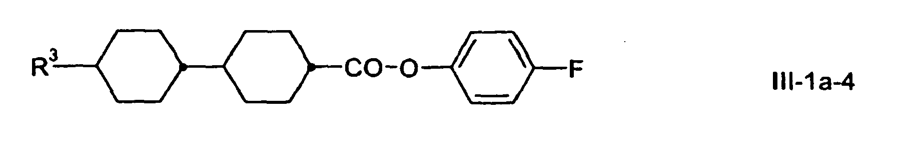 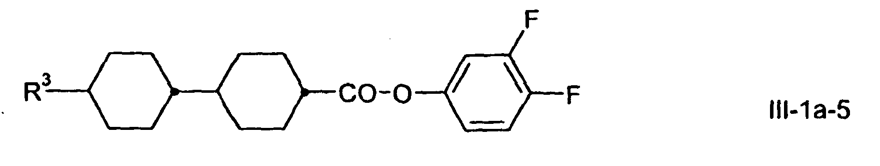 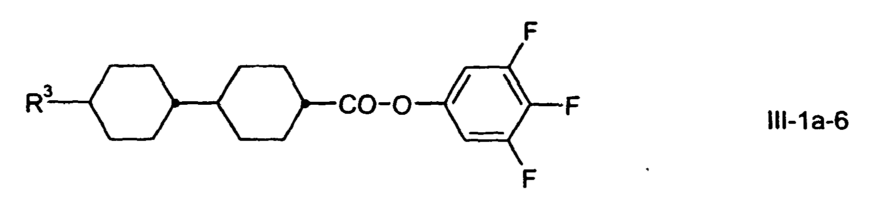 wherein the R³ has the meaning given above.

Preferably component B comprises one or more compounds of formula II-2a, which are preferably selected from the group of compounds of formulae III-2a-1 to III-2a-4 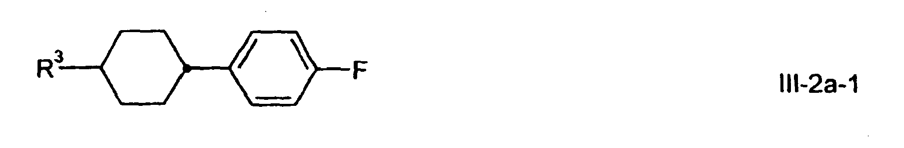 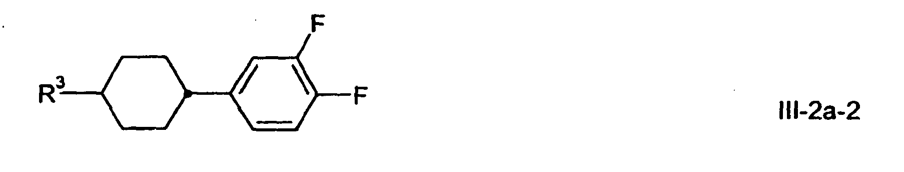 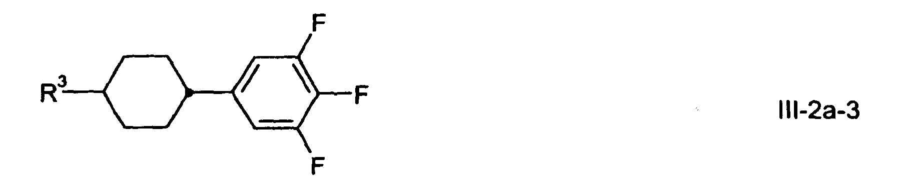 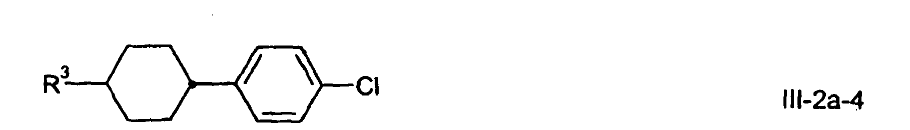 wherein the R³ has the meaning given above.

Preferably component B comprises one or more compounds of formula II-2b, which are preferably selected from the group of compounds of formulae III-2b-1 to III-2b-5 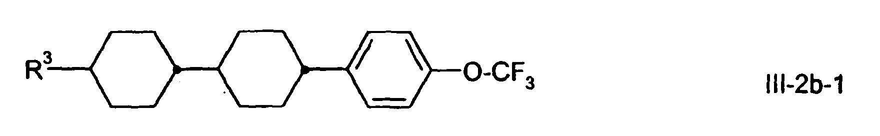 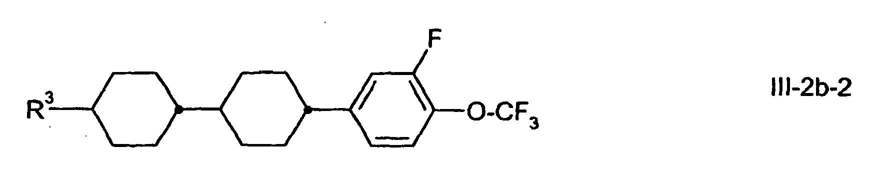 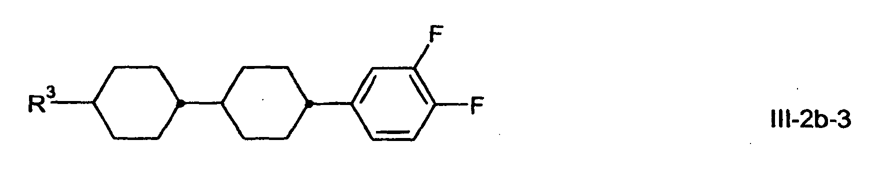 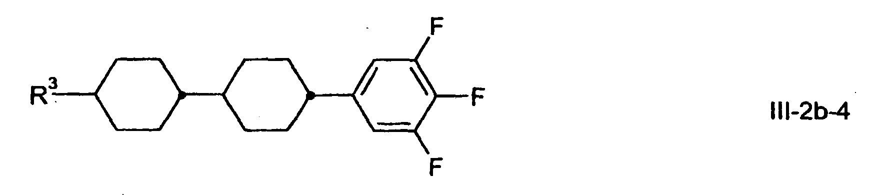 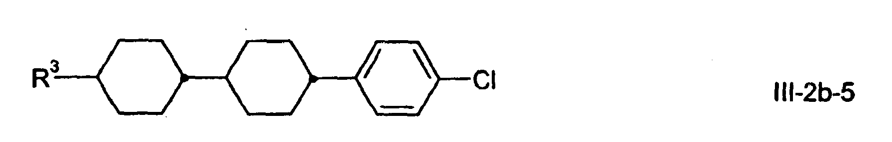 wherein the R³ has the meaning given above.

Preferably component B comprises one or more compounds selected from the group of compounds of formulae III-2c and III-2d, which are preferably selected from the group of compounds of formulae III-2c-1 and III-2d-1 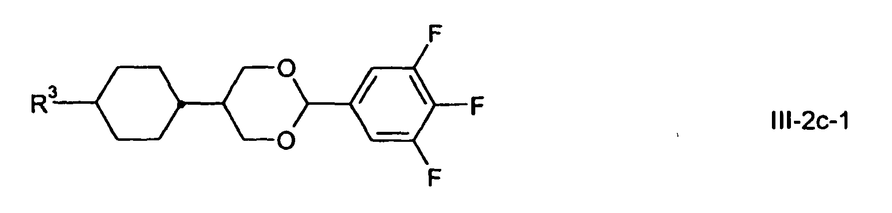 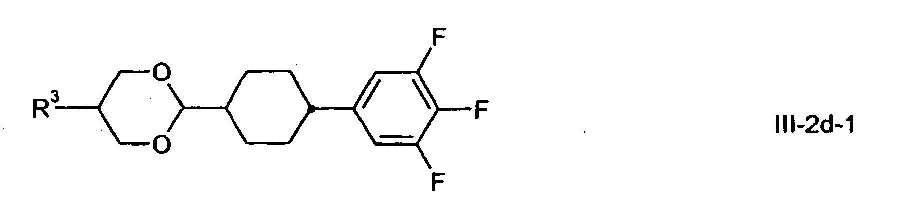 wherein the R³ has the meaning given above.

Preferably component B comprises one or more compounds of formula III-2e, which are preferably selected from the group of compounds of formulae III-2e-1 to III-2e-5 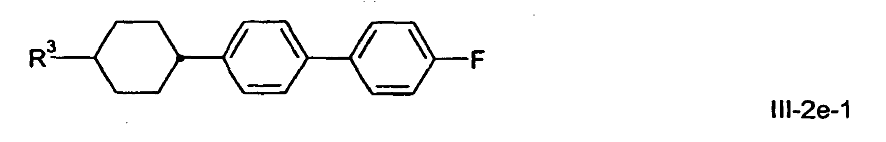 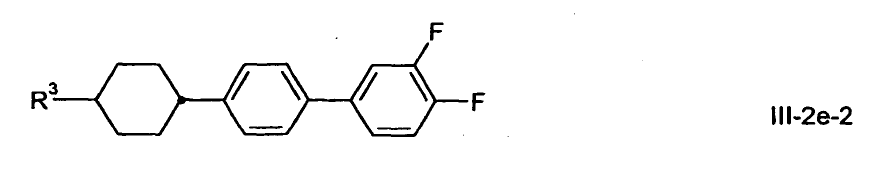 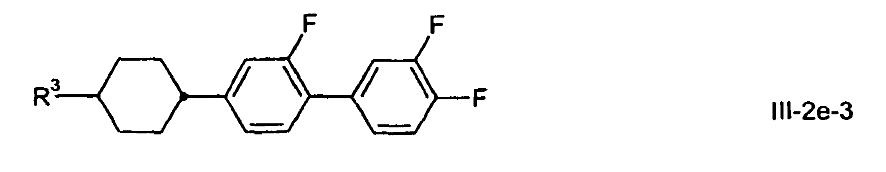 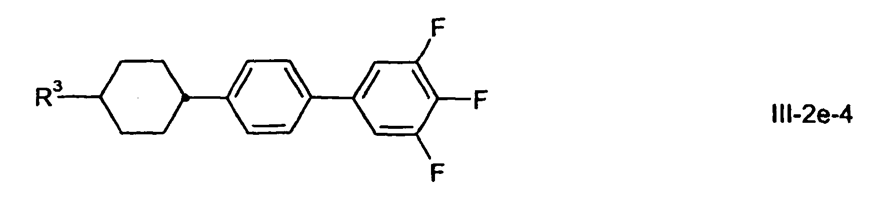 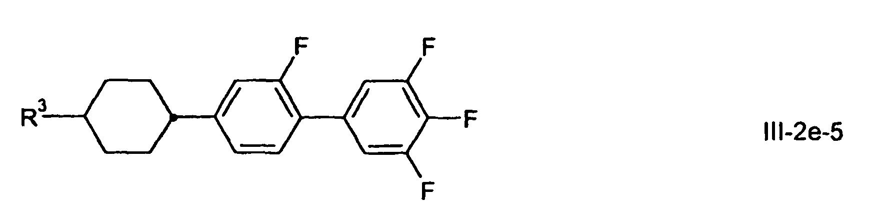 wherein the R³ has the meaning given above.

Preferably component B comprises one or more compounds of formula III-2f, which are preferably selected from the group of compounds of formulae III-2f-1 to III-2f-5 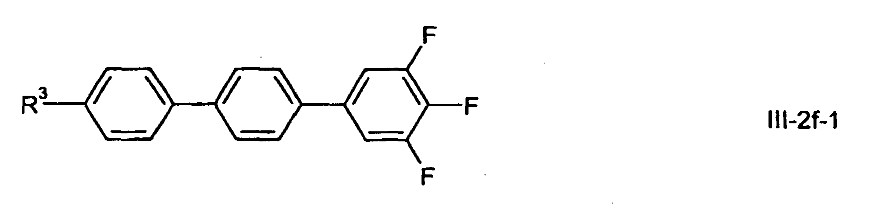 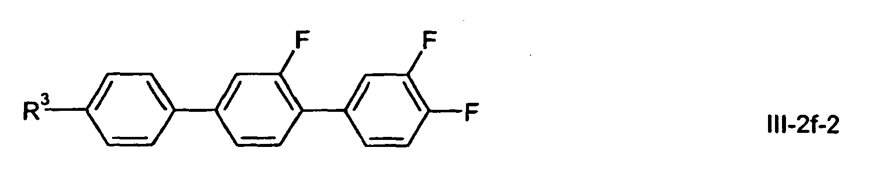 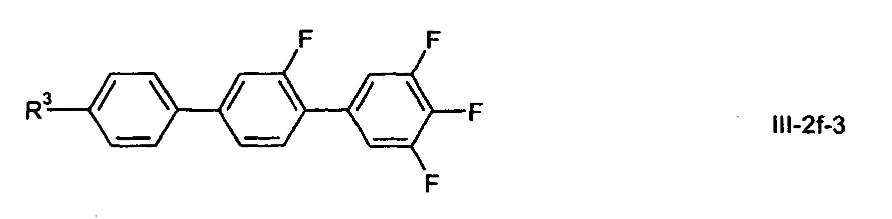 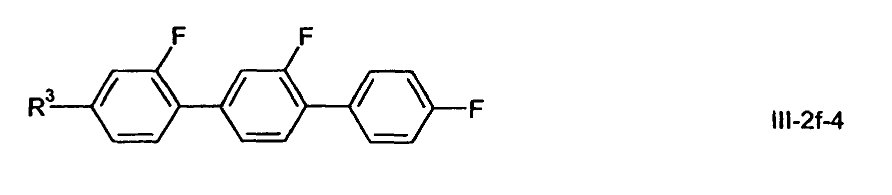 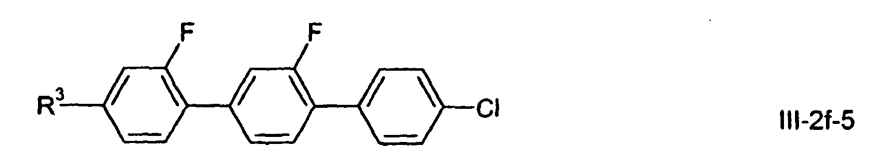 wherein the R³ has the meaning given above.

Preferably component B comprises one or more compounds of formula III-2g, which are preferably selected from the group of compounds of formulae III-2g-1 to III-2g-3 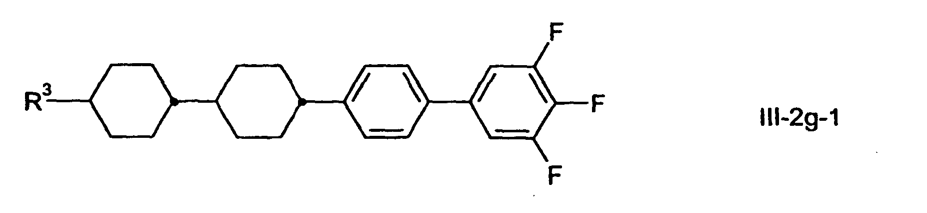 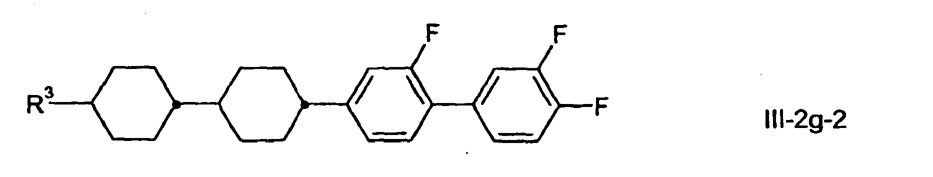 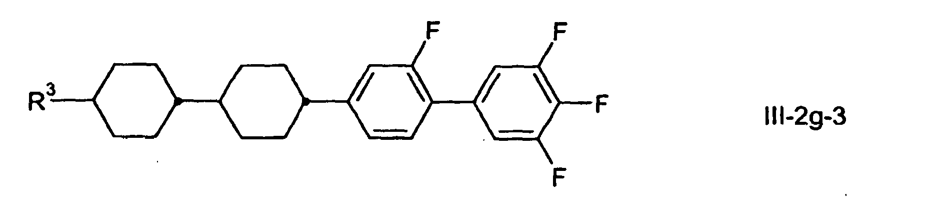 wherein the R³ has the meaning given above.

Alternatively or additionally to compounds of formulae III-1 and/or III-2 the media according to the present invention my comprise one or more compounds of formula III-3 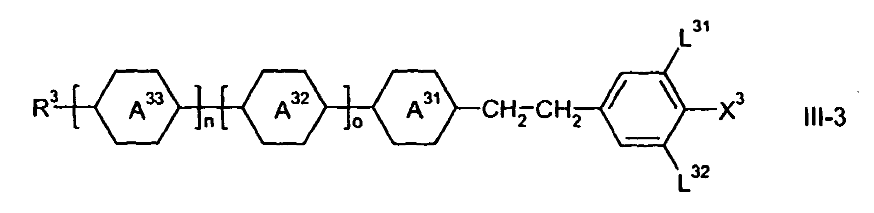 wherein the parameters have the respective meanings given under formula III above and preferably of formula III-3a 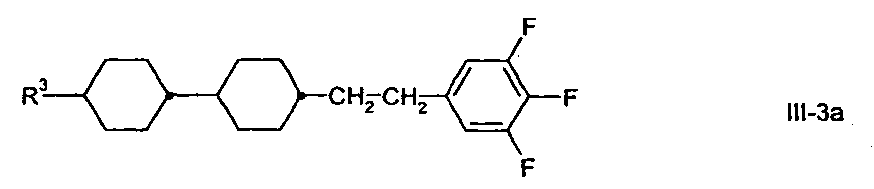 wherein the R³ has the meaning given above.

Preferably the liquid crystalline media according to the present invention comprise an additional dielectrically neutral component, component C. This component has a dielectric anisotropy in the range from -1.5 to 3. Preferably it comprises, preferably consists predominantly of, preferably consists essentially of and especially preferably consists entirely of dielectrically neutral compounds, having a dielectric anisotropy in the range from -1.5 to 3. Preferably this component comprises one or more, more preferably comprises predominantly of, more preferably comprises essentially of and especially preferably consists entirely of dielectrically neutral compounds, having a dielectric anisotropy in the range from -1.5 to 3, of formula IV 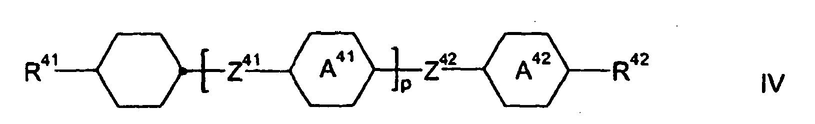 wherein
compounds of formula I are excluded from formula IV,
- R⁴¹, and R⁴²,: independently of each other have the meaning given for R² under formula II above, preferably R⁴¹ is alkyl and R⁴² is alkoxy, 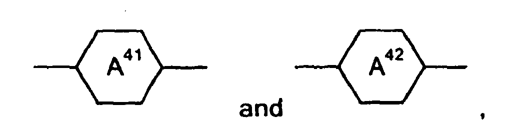 independently of each other, and in case 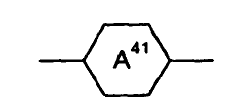 is present twice, also these, independently of each other, are 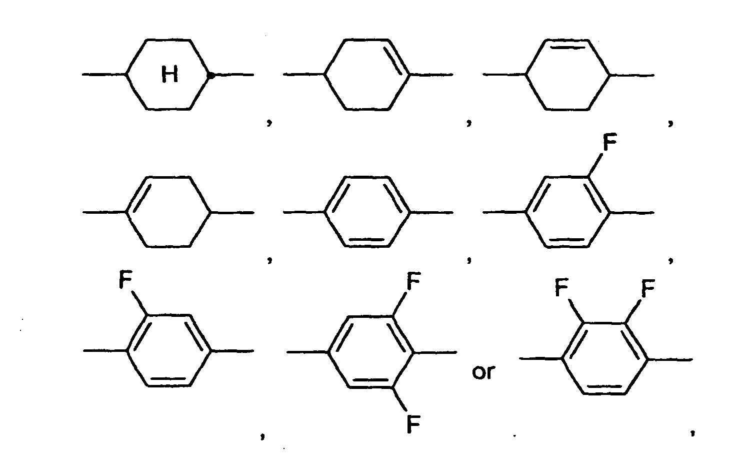 preferably at least one of 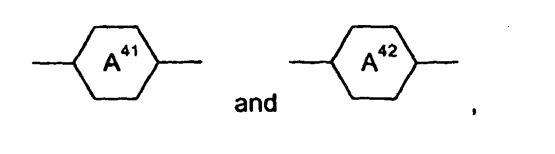 is, 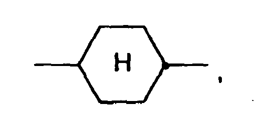
- Z⁴¹ and Z⁴²: are, independently of each other, and in case Z⁴¹ is present twice, also these independently of each other, -CH₂CH₂-, -COO-, trans- -CH=CH-, trans- -CF=CF-, -CH₂O-, -CF₂O- or a single bond, preferably at least one of them is a single bond, and
- p: is 0, 1 or 2, preferably 0 or 1.

Preferably the dielectrically neutral component, component B, comprises one or more compounds selected from the group of compounds of formulae IV-1 to IV-5 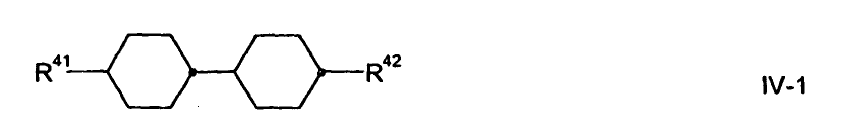 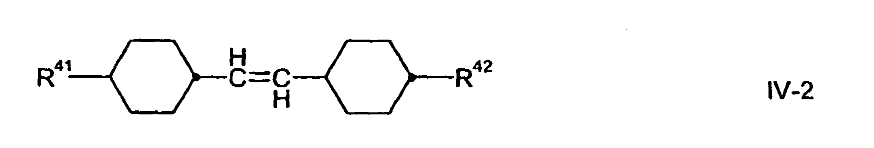 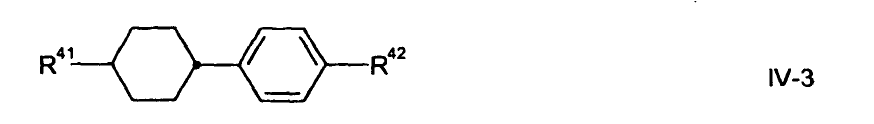 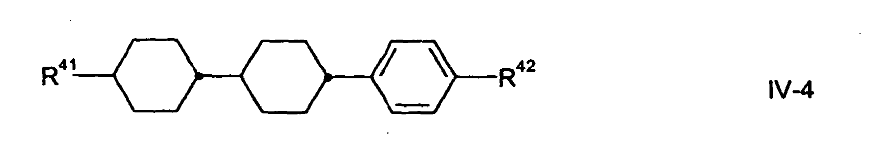 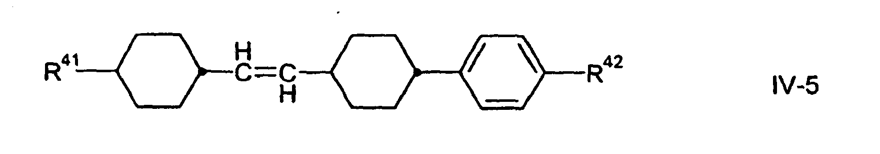 wherein compounds of formula I are excluded from formula IV-1, R⁴¹ and R⁴² have the respective meanings given under formula IV above and in formulae IV-1, IV-4 and IV-5 R⁴¹ preferably is alkyl or alkenyl, preferably alkenyl and R⁴² preferably is alkyl or alkenyl, preferably alkyl, in formula IV-2 R⁴¹ and R⁴² preferably are alkyl and in formula IV-3 R⁴¹ preferably is alkyl or alkenyl, preferably alkyl and R⁴² preferably is alkyl or alkoxy, preferably alkoxy.

Preferably the dielectrically neutral component, component C, comprises one or more compounds selected from the group of compounds of formulae IV-1, IV-3, IV-4 and IV-5, preferably one or more compounds of formula IV-1 and one or more compounds selected from the group of formulae IV-3 and IV-4, preferably one or more compounds each of formulae IV-1, IV-3 and IV-4 and most preferably one or more compounds each of formulae IV-1, IV-3, IV-4 and IV-5.

In a further preferred embodiment of the present invention, which may the same as the previous one or a different one, the liquid crystal mixtures according to the present invention comprise component C, comprising, preferably predominantly consisting of and most preferably entirely consisting of compounds of formula IV selected from the group of compounds of formulae IV-1 to IV-5, as shown above, and optionally of formulae IV-6 to IV-13 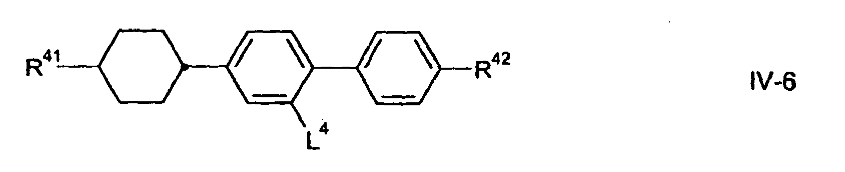 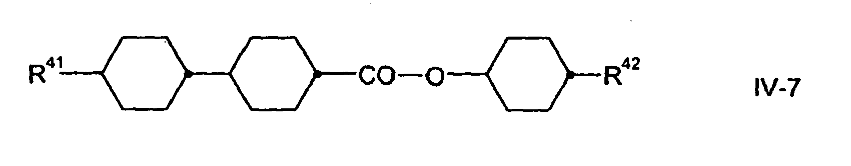 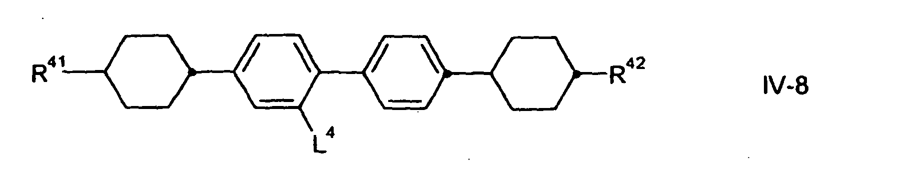 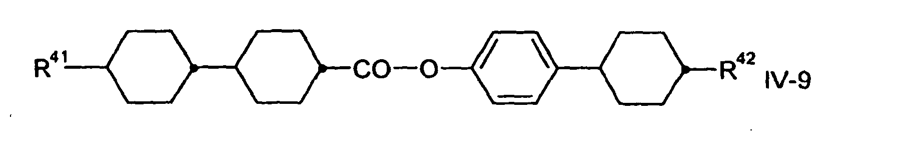 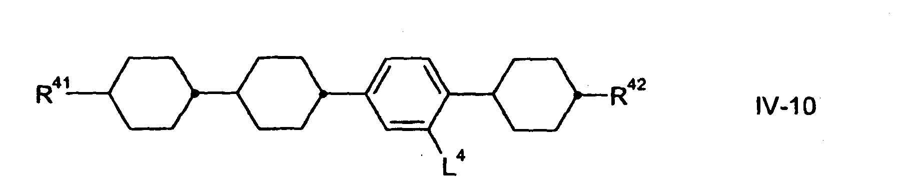 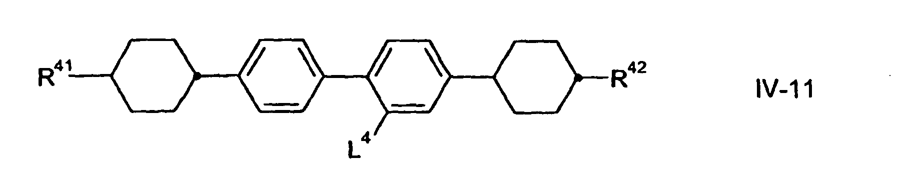 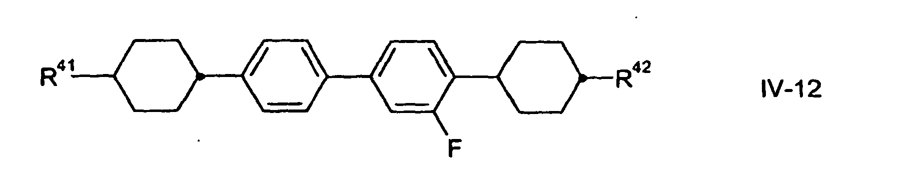 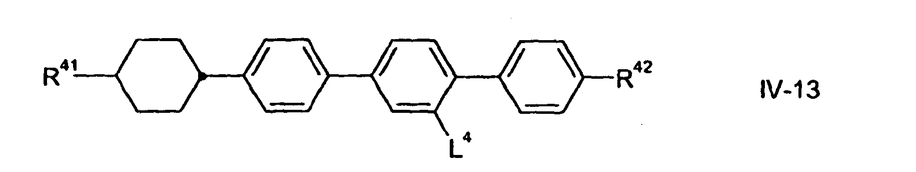 wherein
- R⁴¹ and R⁴²: are, independently of each other, alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms and
- L⁴: is H or F.

Alternatively or additionally to compounds of formulae II and/or III the media according to the present invention my comprise one or more dielectrically positive compounds of formula V 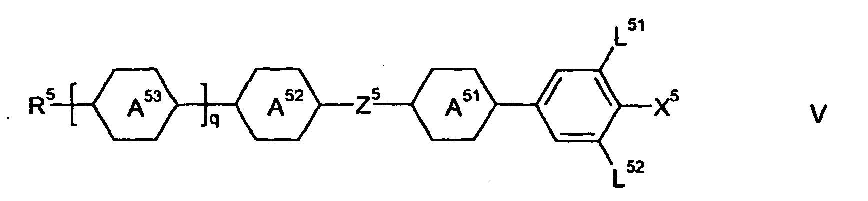 wherein
- R⁵: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, and R¹ preferably is alkyl or alkenyl, 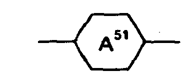 to 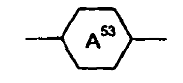 are, independently of each other, 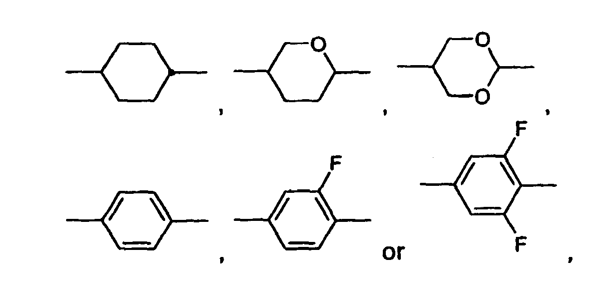
- L⁵¹ and L⁵²,: are, independently of each other, H or F, preferably L⁵¹ is F and
- X⁵: is halogen, halogenated alkyl or alkoxy with 1 to 3 C-atoms or halogenated alkenyl or alkenyloxy wit 2 or 3 C-atoms, preferably F, Cl, -OCF₃ or -CF₃, most preferably F, Cl or -OCF₃,
- Z⁵: is -CH₂CH₂-, -CF₂CF₂-, -COO-, trans- -CH=CH-, trans--CF=CF- or -CH₂O, preferably -CH₂CH₂-, -COO- or trans- -CH=CH- and most preferably -COO- or -CH₂CH₂-, and
- q: is 0 or 1.

Preferably the media according to the present invention comprises one or more compounds of formula V, preferably selected from the group of compounds of formulae V-1 and V-2 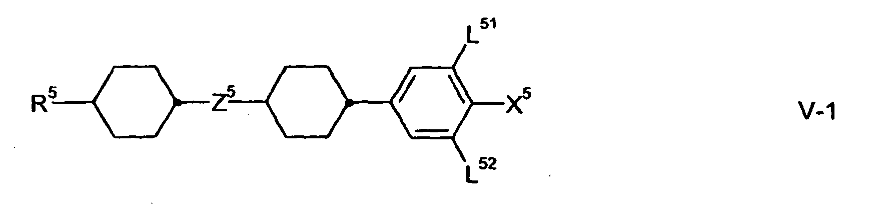 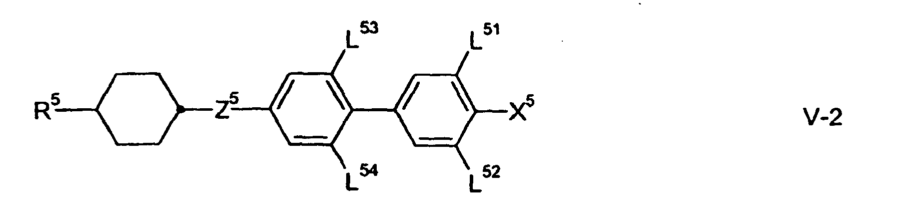 wherein the parameters have the respective meanings given above and the parameters L⁵³ and L⁵⁴ are, independently of each other and of the other parameters, H or F and preferably Z⁵ is -CH₂-CH₂-.

Preferably the compounds of formula V-1 are selected from the group of compounds of formulae V-1a and V-1b 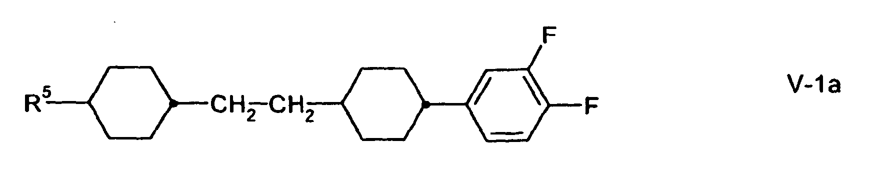 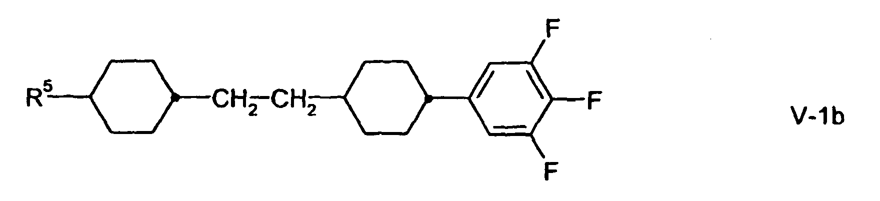 wherein the R⁵ has the meaning given above.

Preferably the compounds of formula V-2 are selected from the group of compounds of formulae V-2a to V-2d 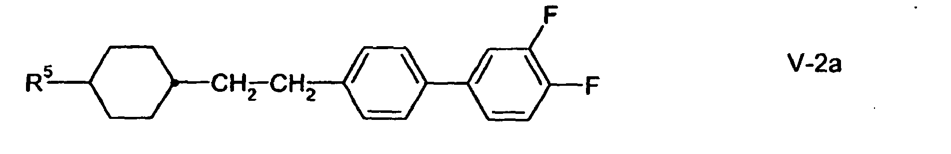 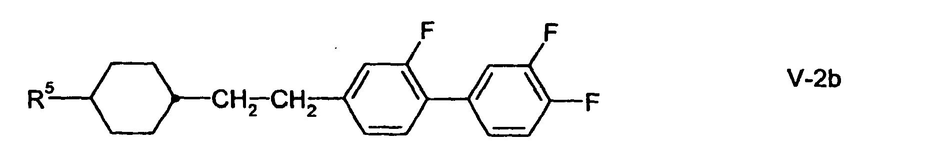 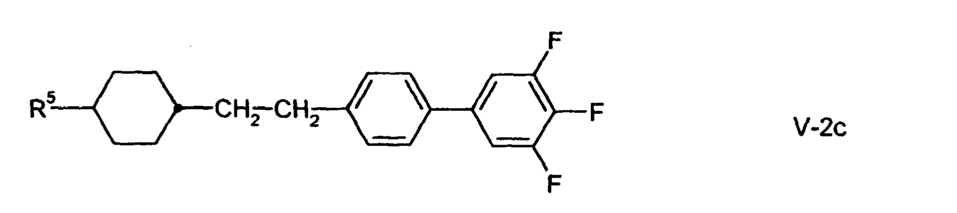 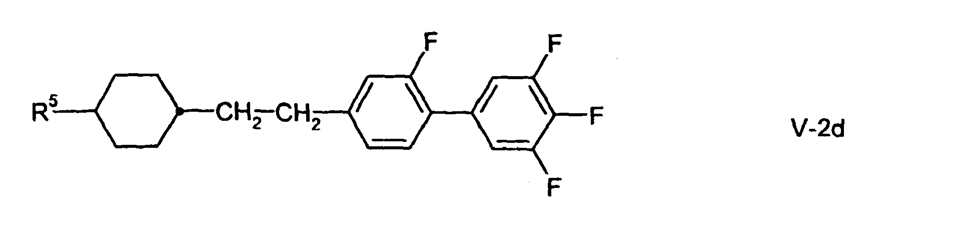 wherein the R⁵ has the meaning given above.

Preferably the liquid crystalline media according to the present invention comprise an additional dielectrically neutral component, component D. This component has a dielectric anisotropy in the range from -1.5 to 3. Preferably it comprises, preferably consists predominantly of, preferably consists essentially of and especially preferably consists entirely of dielectrically neutral compounds, having a dielectric anisotropy in the range from -1.5 to 3. Preferably this component comprises one or more, more preferably comprises predominantly of, more preferably comprises essentially of and especially preferably consists entirely of dielectrically neutral compounds, having a dielectric anisotropy in the range from -1.5 to 3, of formula VI 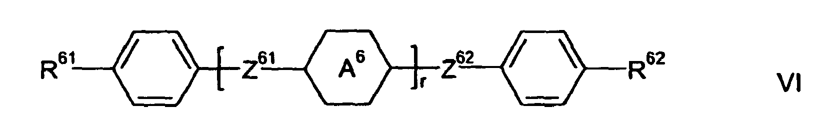 wherein
- R⁶¹, and R⁶²,: independently of each other have the meaning given for R² under formula II above, preferably R⁶¹ is alkyl and R⁶² is alkyl or alkenyl, 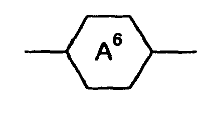 and in case it is occurring twice in each occurrence independently of each other, is 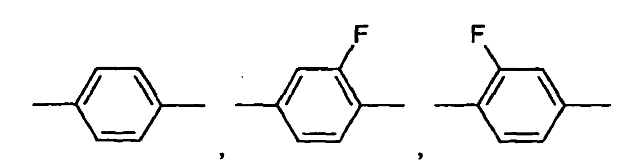 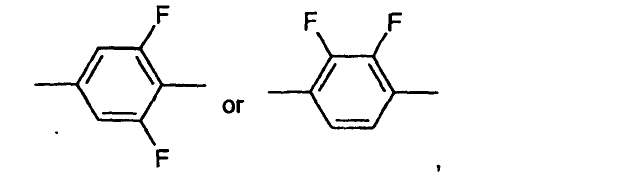 preferably at least one of 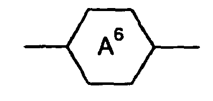 is 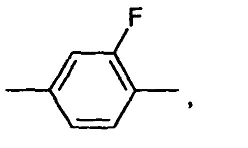
- Z⁶¹ and Z⁶²: are, independently of each other, and in case Z⁶¹ is present twice, also these independently of each other, -CH₂CH₂-, -COO-, trans- -CH=CH-, trans- -CF=CF-, -CH₂O-, -CF₂O- or a single bond, preferably at least one of them is a single bond, and
- r: is 0, 1 or 2, preferably 0 or 1.

Preferably the dielectrically neutral component, component D, comprises one or more compounds selected from the group of compounds of formulae VI-1 and VI-2 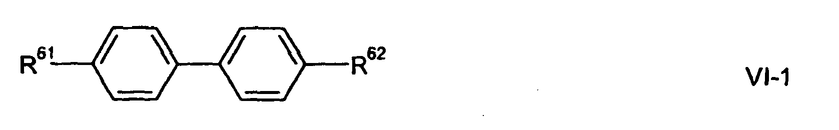 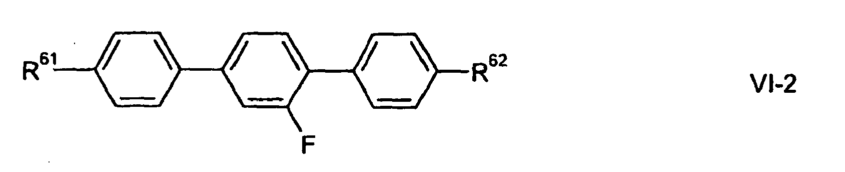 wherein R⁶¹ and R⁶² have the respective meanings given under formula VI above and R⁶¹ preferably is alkyl and in formula VI-1 R⁶² preferably is alkenyl, preferably -(CH₂)₂-CH=CH-CH₃ and in formula VI-2 R⁶² preferably is alkyl.

Preferably the dielectrically neutral component, component D, comprises one or more compounds selected from the group of compounds of formulae VI-1 and VI-2 wherein preferably R⁶¹ is n-alkyl and in formula VI-1 R⁶² preferably is alkenyl and in formula VI-2 R⁶² preferably is n-alkyl.

Preferably the liquid crystal mixtures according to the present invention do contain at least one further component besides components A and B. This third component may be either one of components C and D, preferably the third component present is component C.

Obviously the mixtures according to the present invention also can contain all for components A, B, C and D.

Additionally the liquid crystal mixtures according to the present invention may comprise a further optional component, component E, which has a negative dielectric anisotropy and comprises, preferably predominantly consists of, more preferably essentially consists of and most preferably entirely consists of dielectrically negative compounds preferably of formula VII 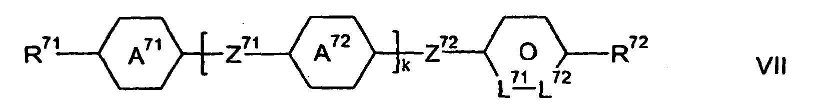 wherein
- R⁷¹ and R⁷²: independently of each other have the meaning given for R² under formula II above, 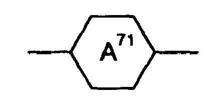 is 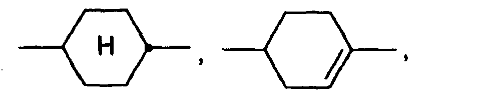 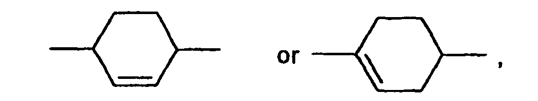 preferably 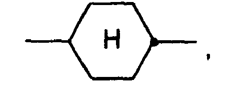 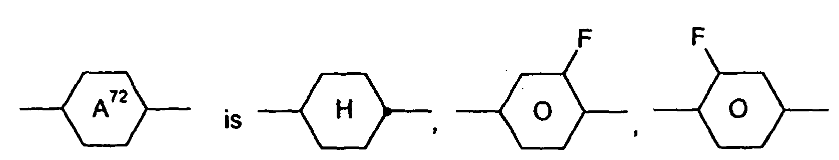 or 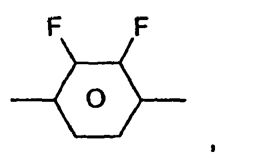
- Z⁷¹ and Z⁷²: are, independently of each other, -CH₂CH₂-, -COO-, trans- CH=CH-, trans- -CF=CF-, -CH₂O-, -CF₂O- or a single bond, preferably at least one of them is a single bond and most preferably both are a single bond,
- L⁷¹ and L⁷²: are, independently of each other, C-F or N, preferably at least one of them is C-F and most preferably both of them are C-F and
- k: is 0 or 1.

Preferably the liquid crystalline media according to the instant invention comprise, preferably predominantly consist of and most preferably entirely consist of components A to E and in particular of compounds selected from the group of compounds of formulae I to VII.

Comprising in this application means in the context of compositions that the entity referred to, e.g. the medium or the component, contains the component or components or of the compound or compounds in question, preferably in a total concentration of 10 % or more and most preferably of 20 % or more.

Predominantly consisting of, in this context, means that the entity referred to contains 55 % or more, preferably 60 % or more and most preferably 70 % or more of the component or components or of the compound or compounds in question.

Essentially consisting of, in this context, means that the entity referred to contains 80 % or more, preferably 90 % or more and most preferably 95 % or more of the component or components or of the compound or compounds in question.

Entirely consisting of, in this context, means that the entity referred to contains 98 % or more, preferably 99 % or more and most preferably 100.0 % of the component or components or of the compound or compounds in question.

Component E preferably comprises, preferably predominantly consists of and most preferably entirely consists of one or more compounds of formula VII, preferably selected from the group of compounds of formulae VII-1 to VII-3 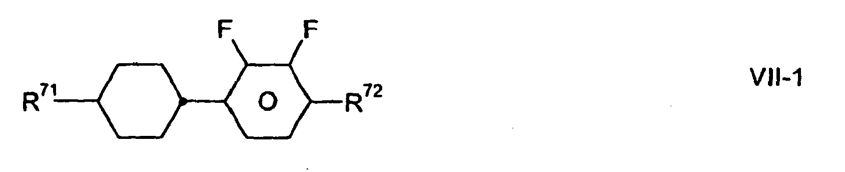 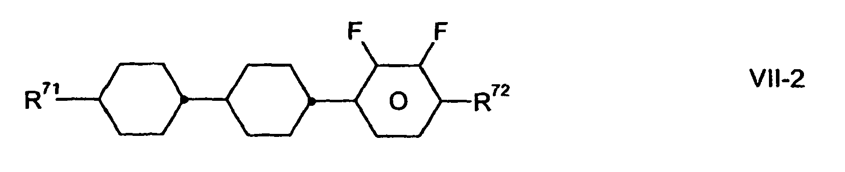 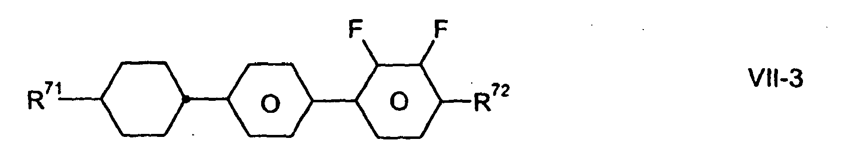 wherein

R⁷¹ and R⁷² have the respective meanings given under formula VI above.

In formulae VII-1 to VII-3 R⁷¹ preferably is n-alkyl or 1-E-alkenyl and R⁷² preferably is n-alkyl or alkoxy.

Also other mesogenic compounds, which are not explicitly mentioned above, can optionally and beneficially be used in the media according to the instant invention. Such compounds are known to the expert in the field.

The liquid crystal media according to the instant invention are characterized by a clearing point of 70 °C or more, preferably of 75 °C or more and in particular of 80 °C or more.

The Δn, at 589 nm (Na^{D}) and 20 °C, of the liquid crystal media according to the instant invention preferably is in the range of 0.060 or more to 0.135 or less, more preferably in the range of 0.070 or more to 0.125 or less and most preferably in the range of 0.080 or more to 0.120 or less.

The Δε, at 1 kHz and 20 °C, of the liquid crystal medium according to the invention is 4.0 or more.

Preferably the nematic phase of the inventive media extends at least from 0 °C or less to 70 °C more, more preferably at least from -20 °C or less to 70 °C more, most preferably at least from -30 °C or less to 75 °C more and in particular at least from -40 °C or less to 75 °C more.

In a first preferred embodiment of the present invention the Δn of the liquid crystal media is n the range of 0.090 or more to 0.125 or less, more preferably in the range of 0.095 or more to 0.120 or less and most preferably in the range of 0.100 or more to 0.115 or less, whereas Δε preferably is in the range from 4.0 or more to 7.0 or less.

In a second preferred embodiment of the present invention the Δn of the liquid crystal media is n the range of 0.085 or more to 0.130 or less, more preferably in the range of 0.090 or more to 0.125 or less and most preferably in the range of 0.095 or more to 0.120 or less, whereas Δε preferably is 6.0 or more, more preferably 7.0 or more, even more preferably 8.0 or more and most preferably in the range from 8.0 or more to 10.0 or less.

In this embodiment preferably the nematic phase of the inventive media extends at least from -20 °C or less to 70 °C more, more preferably at least from -20 °C or less to 70 °C more, most preferably at least from -30 °C or less to 70 °C more and in particular at least from -40 °C or less to 70 °C more.

In a third preferred embodiment of the present invention the Δn of the liquid crystal media is n the range of 0.070 or more to 0.120 or less, more preferably in the range of 0.075 or more to 0.115 or less and most preferably in the range of 0.080 or more to 0.110 or less, whereas Δε preferably is 4.0 or more, more preferably is in the range from 4.0 or more to 14.0 or less and most preferably either in the range from 4.0 or more to 6.0 or less or, particularly preferred in the range from 6.0 or more to 11.0 or less.

In this embodiment preferably the nematic phase of the inventive media extends at least from -20°C or less to 75°C more, more preferably at least from -30 °C or less to 70 °C more, most preferably at least from -30 °C or less to 75 °C more and in particular at least from -30 °C or less to 80 °C more.

Component B preferably is used in a concentration from 10 % to 60 %, more preferably from 15 % to 55 %, more preferably from 20 % to 50 % and most preferably from 25 % to 45 % of the total mixture.

Component C preferably is used in a concentration from 0 % to 50 %, more preferably from 0 % to 40 %, more preferably from 0 % to 30 % and most preferably from 10 % to 30 % of the total mixture.

Component D preferably is used in a concentration from 0 % to 40 %, preferably from 0 % to 30 %, more preferably from 0 % to 15 % and most preferably from 1 % to 10 % of the total mixture.

Component E preferably is used in a concentration from 0 % to 30 %, preferably from 0 % to 15 % and most preferably from 1 % to 10 % of the total mixture.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 1 % to 15 %.

In the present invention component A is used in a concentration from 45 % to 60 % and preferably from 50 % to 57 % of the total mixture, whereas component D preferably is used in a concentration from 5 % to 40 %, preferably from 10 % to 35 % and most preferably from 15 % to 30 % of the total mixture.

In this preferred embodiment the media preferably comprise one or more compounds of formula VI and most preferably of formula VI-2.

Especially in the second preferred embodiment of the present invention mentioned above component C preferably comprises one or more compounds of formula IV, more preferably of formula IV-1, more preferably of formula CC-n-V and/or CC-n-Vm, more preferably of formula CC-n-V1 and/ or CC-n-V and most preferably of formula CC-3-Vm.

In the third preferred embodiment of the present invention mentioned above component A preferably is used in a concentration from 20 % to 65 %, more preferably from 25 % to 60 % and most preferably from 30 % to 50 % of the total mixture, whereas component B preferably is used in a concentration from 14 % to 60 %, more preferably from 15 % to 55 % and most preferably from 20 % to 50 % of the total mixture, whereas Component C preferably is used in a concentration from 0 % to 50 %, more preferably from 0 % to 40 %, more preferably from 0 % to 30 % and most preferably from 5 % to 30 % of the total mixture, whereas component D preferably is used in a concentration from 0 % to 40 %, preferably from 0 % to 30 % and most preferably from 5 % to 25 % of the total mixture.

Preferably the liquid crystal media contain 50 % to 100 %, more preferably 70 % to 100 % and most preferably 80 % to 100 % and in particular 90 % to 100 % totally of components A, B, C and D, preferably of components A, B and C, which, in turn, contain, preferably predominantly consist of and most preferably entirely consist of one or more of compounds of formulae I, II, III, IV, V, VI and VII, preferably of formulae I, II, III, IV, V and VI, respectively.

In the present application the term dielectrically positive means compounds or components with Δε > 3.0, dielectrically neutral with -1.5 ≤ Δε ≤ 3.0 and dielectrically negative with Δε < -1,5. Δε is determined at a frequency of 1 kHz and at 20 °C. The dielectric anisotropy of the respective compound is determined from the results of a solution of 10 % of the respective individual compound in a nematic host mixture. In case the solubility of the respective compound in the host mixture is less than 10 % the concentration is reduced to 5 %. The capacities of the test mixtures are determined both in a cell with homeotropic and with homogeneous alignment. The cell gap of both types of cells is approximately 20 µm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest. The values are extrapolated to a concentration of the compounds of interest of 100 %. Components having a nematic phase at the measurement temperature of 20 °C are measured as such, all others are treated like compounds.

The term threshold voltage refers in the instant application to the optical threshold and is given for 10 % relative contrast (V₁₀) and the term saturation voltage refers to the optical saturation and is given for 90 % relative contrast (V₉₀) both, if not explicitly stated otherwise. The capacitive threshold voltage (V₀), also called Freedericksz-threshold (V_{Fr}) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties have been determined with test cells prepared at Merck KGaA, Germany. The test cells for the determination of Δε had a cell gap of approximately 20 µm. The electrode was a circular ITO electrode with an area of 1.13 cm² and a guard ring. The orientation layers were lecithin for homeotropic orientation (ε||) and polyimide AL-1054 from Japan Synthetic Rubber for homogeneous orientation (ε_{⊥}). The capacities were determined with a frequency response analyser Solatron 1260 using a sine wave with a voltage of 0.3 Vᵣₘₛ. The light used in the electro-optical measurements was white light. The set up used was commercially available equipment of Otsuka, Japan. The characteristic voltages have been determined under perpendicular observation. The threshold (V₁₀) - mid grey (V₅₀) - and saturation (V₉₀) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 4 to 20 and most preferably of 4 to 16 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-AMD, VAN-AMD, IPS and OCB LCDs and in particular in composite systems, like PDLC, NCAP, PN LCDs and especially in ASM-PA LCDs.

The melting point T(C,N), the transition from the smectic (S) to the nematic (N) phase T(S,N) and the clearing point T(N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups CₙH₂ₙ₊₁ and CₘH₂ₘ₊₁ are straight chain alkyl groups with n respectively m C-atoms. The interpretation of table B is self-evident. Table A does only list the abbreviations for the cores of the structures. The individual compounds are denoted by the abbreviation of the core followed by a hyphen and a code specifying the substituents R¹, R², L¹ and L² follows:

| Code for R¹, R², L¹, L² | R¹, | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nF | CₙH₂ₙ₊₁ | F | H | H |
| nF.F | CₙH₂ₙ₊₁ | F | H | F |
| nF.F.F | CₙH₂ₙ₊₁ | F | F | F |
| nOF | OCₙH₂ₙ₊₁ | F | H | H |
| nCI | CₙH₂ₙ₊₁ | Cl | H | H |
| nCI.F | CₙH₂ₙ₊₁ | Cl | H | F |
| nCLF.F | CₙH₂ₙ₊₁ | Cl | F | F |
| nCF₃ | CₙH₂ₙ₊₁ | CF₃ | H | H |
| nCF₃.F | CₙH₂ₙ₊₁ | CF₃ | H | F |
| nCF₃.F.F | CₙH₂ₙ₊₁ | CF₃ | F | F |
| nOCF₃ | CₙH₂ₙ₊₁ | OCF₃ | H | H |
| rtOCF₃.F | CₙH₂ₙ₊₁ | OCF₃ | H | F |
| nOCF₃.F.F | CₙH₂ₙ₊₁ | OCF₃ | F | F |
| nOCF₂ | CₙH₂ₙ₊₁ | OCHF₂ | H | H |
| nOCF₂.F | CₙH₂ₙ₊₁ | OCHF₂ | H | F |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | H | F |
| nS.F.F | CₙH₂ₙ₊₁ | NCS | F | F |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |

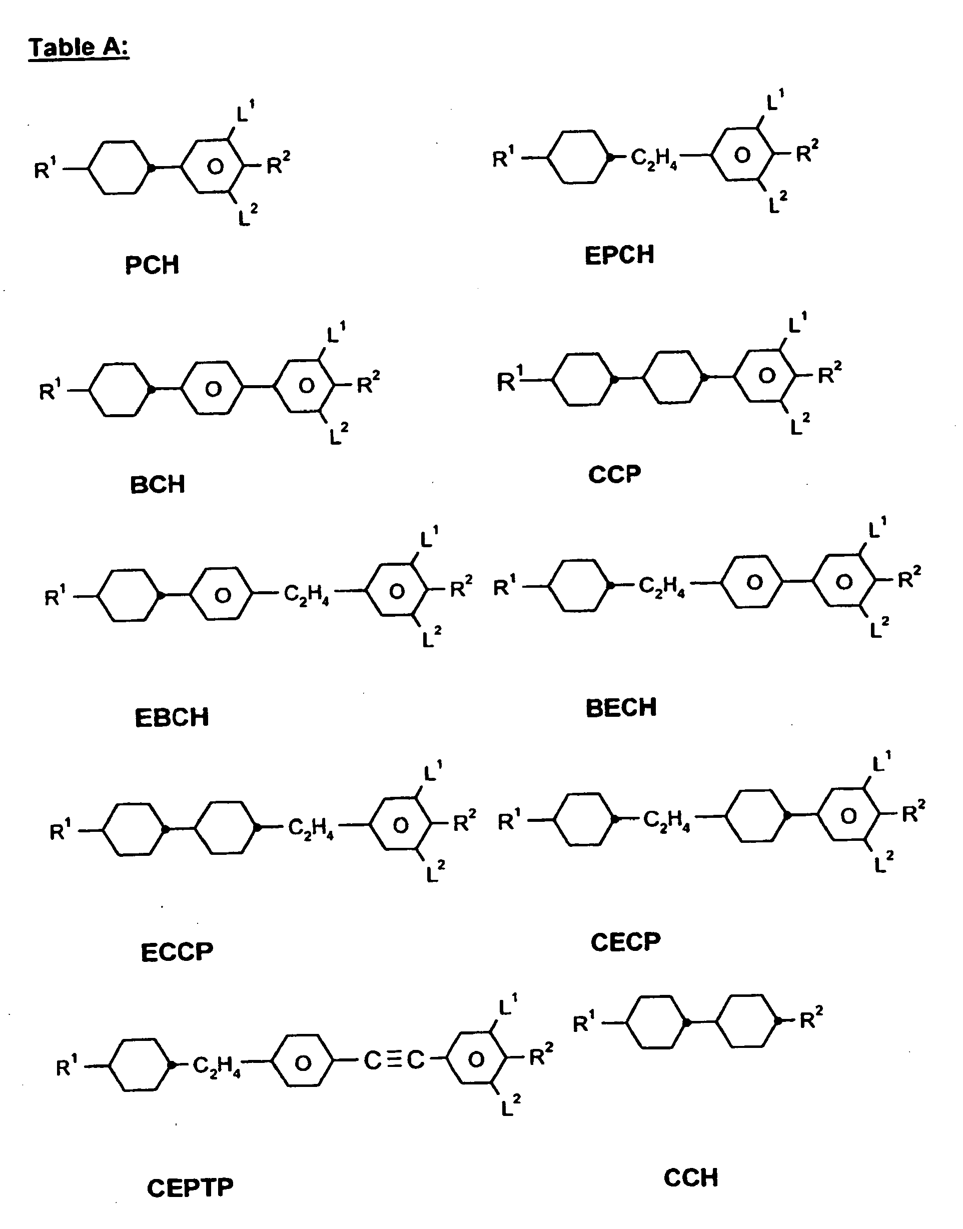

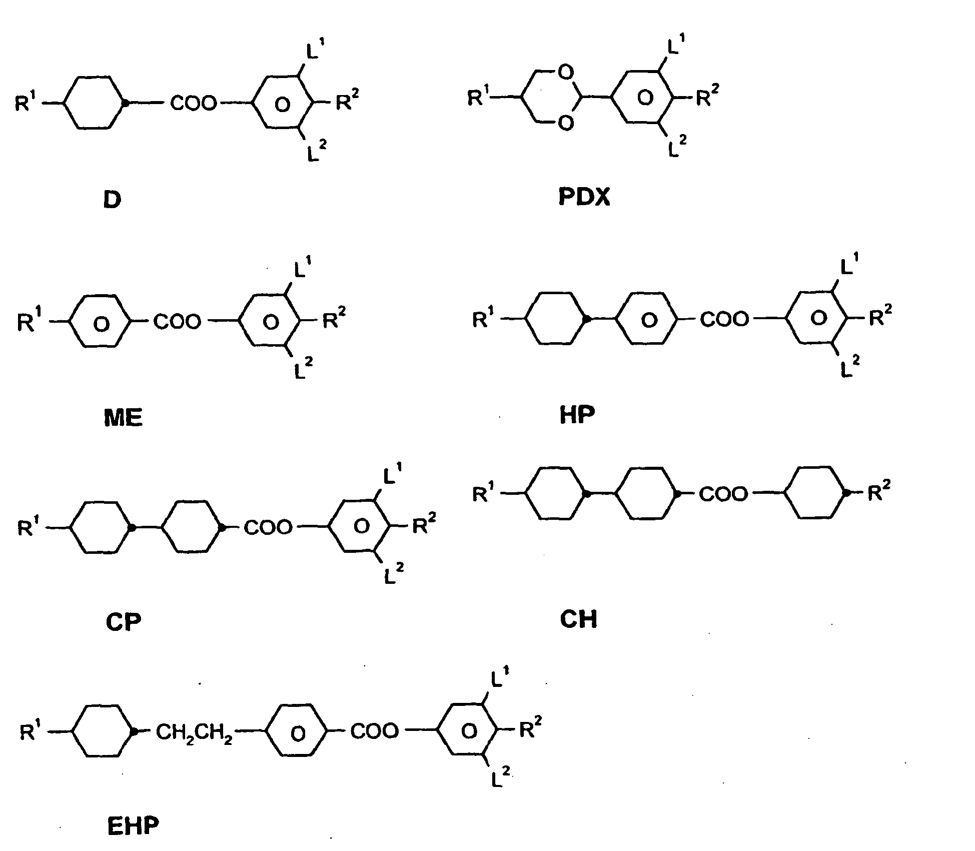

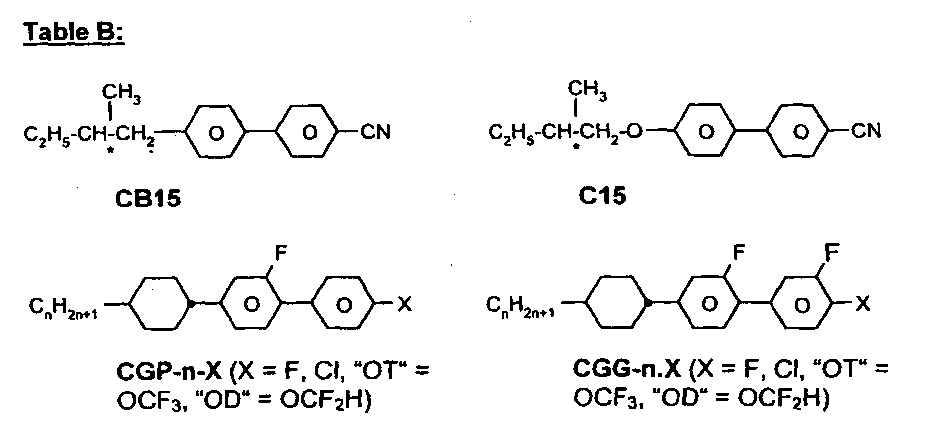

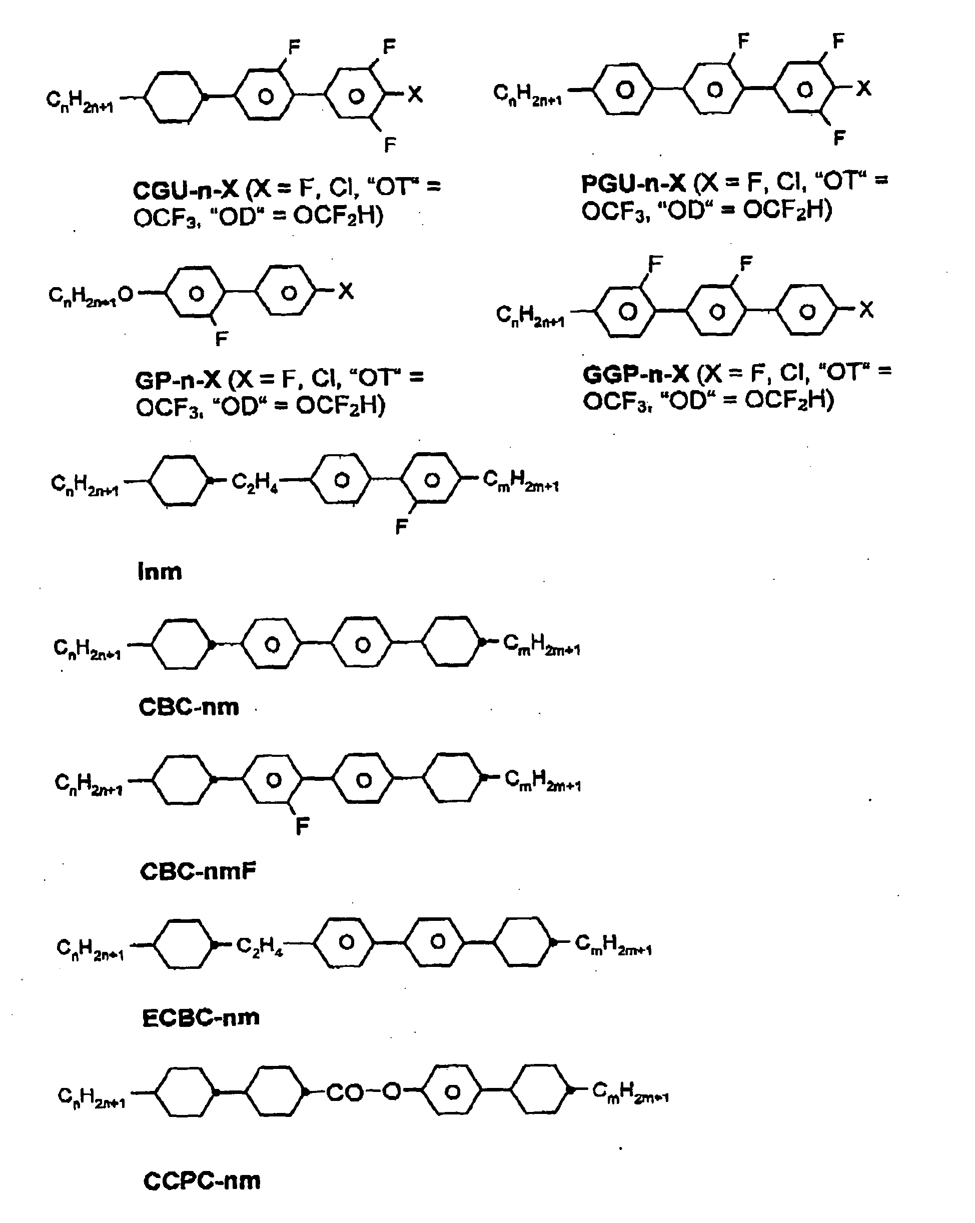

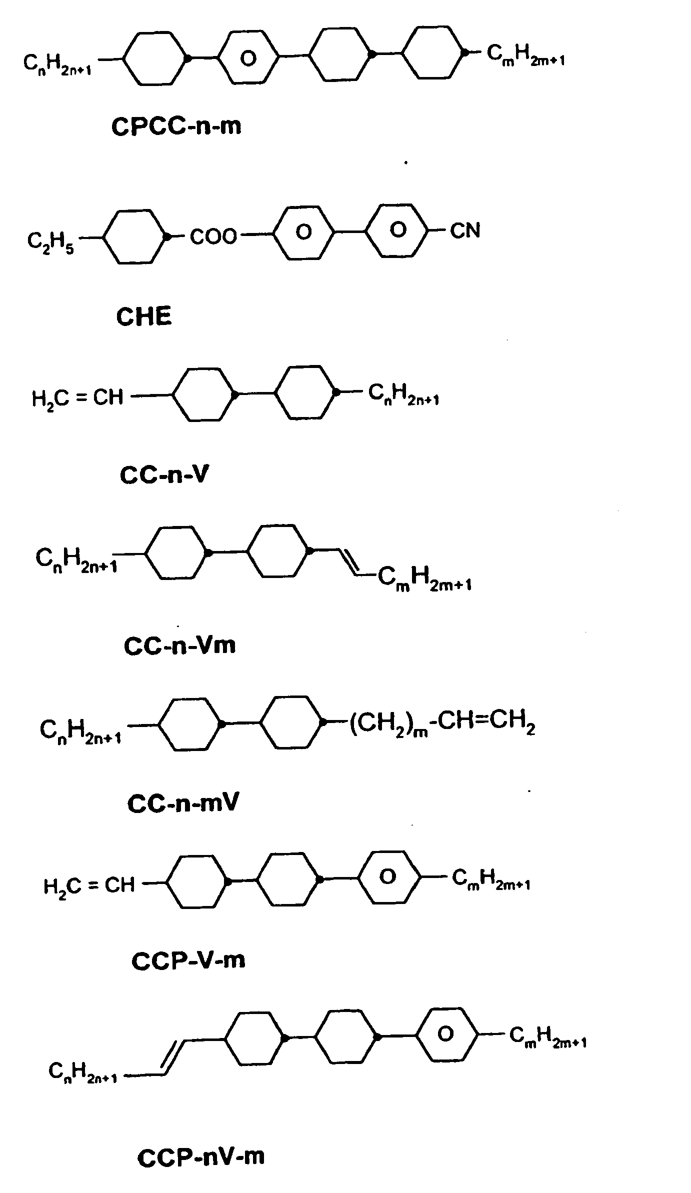

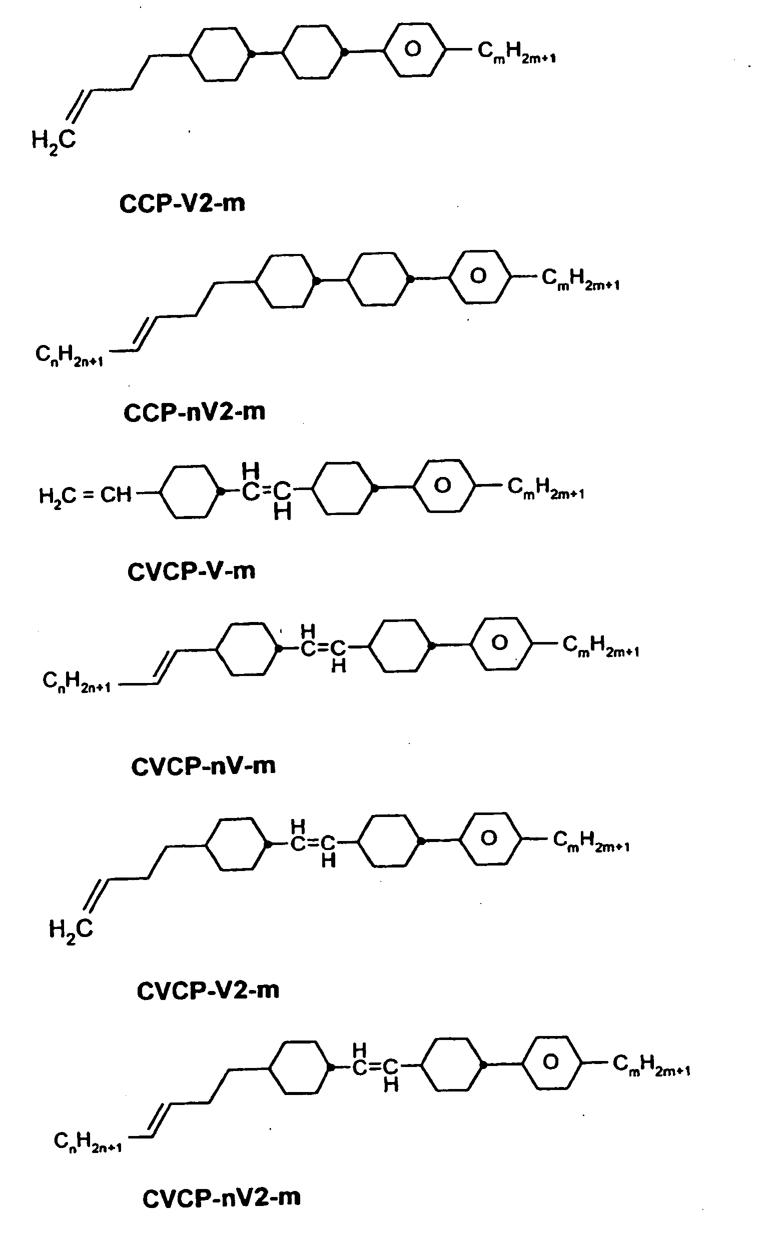

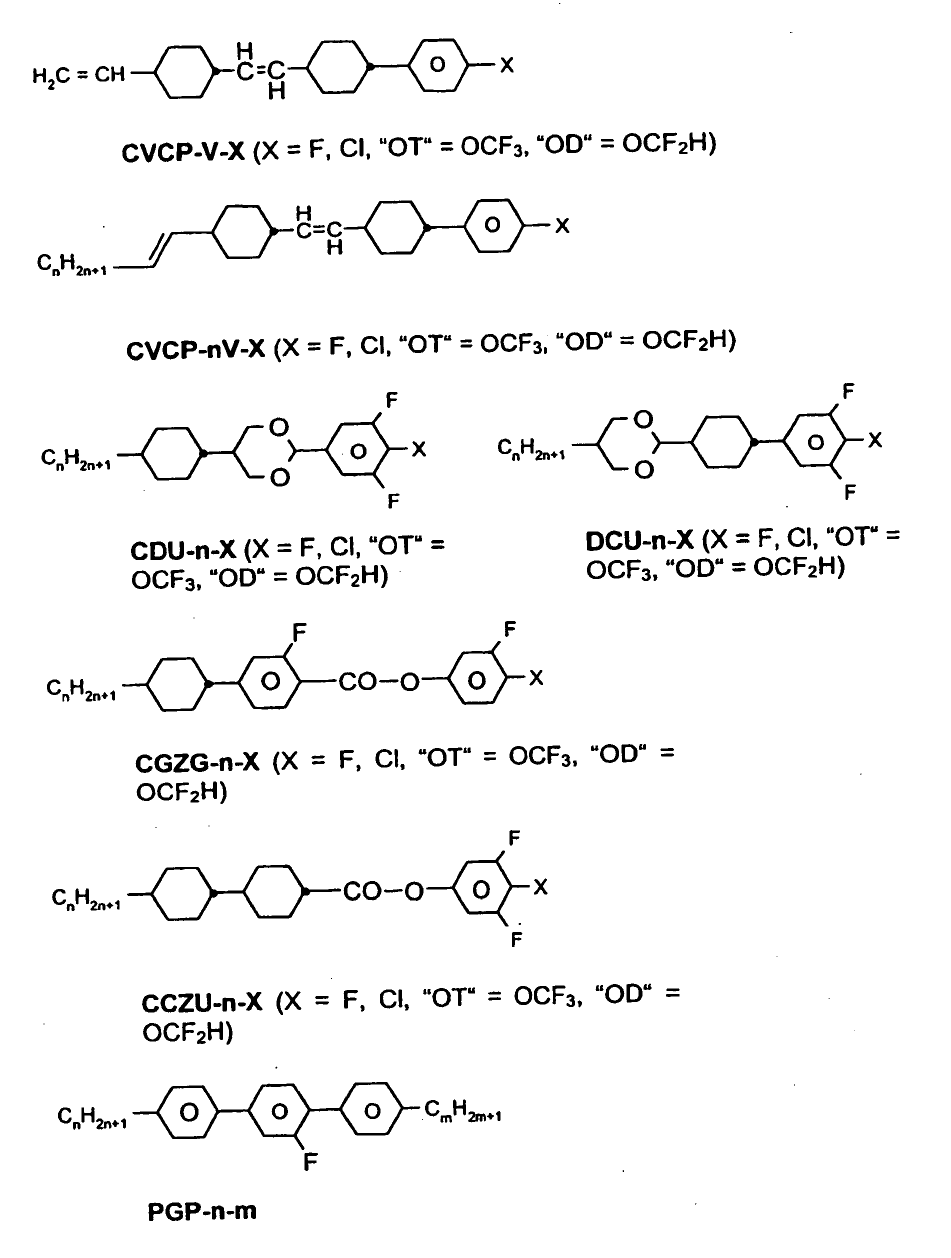

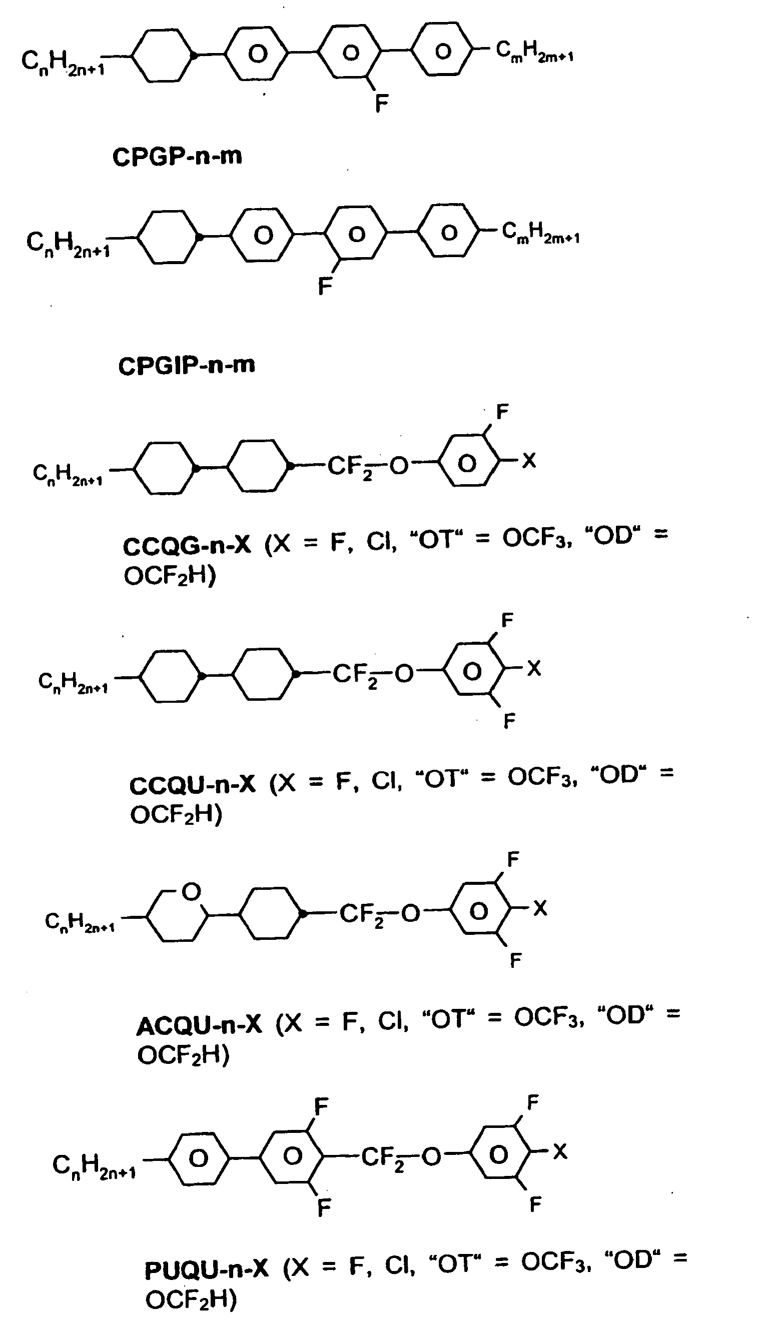

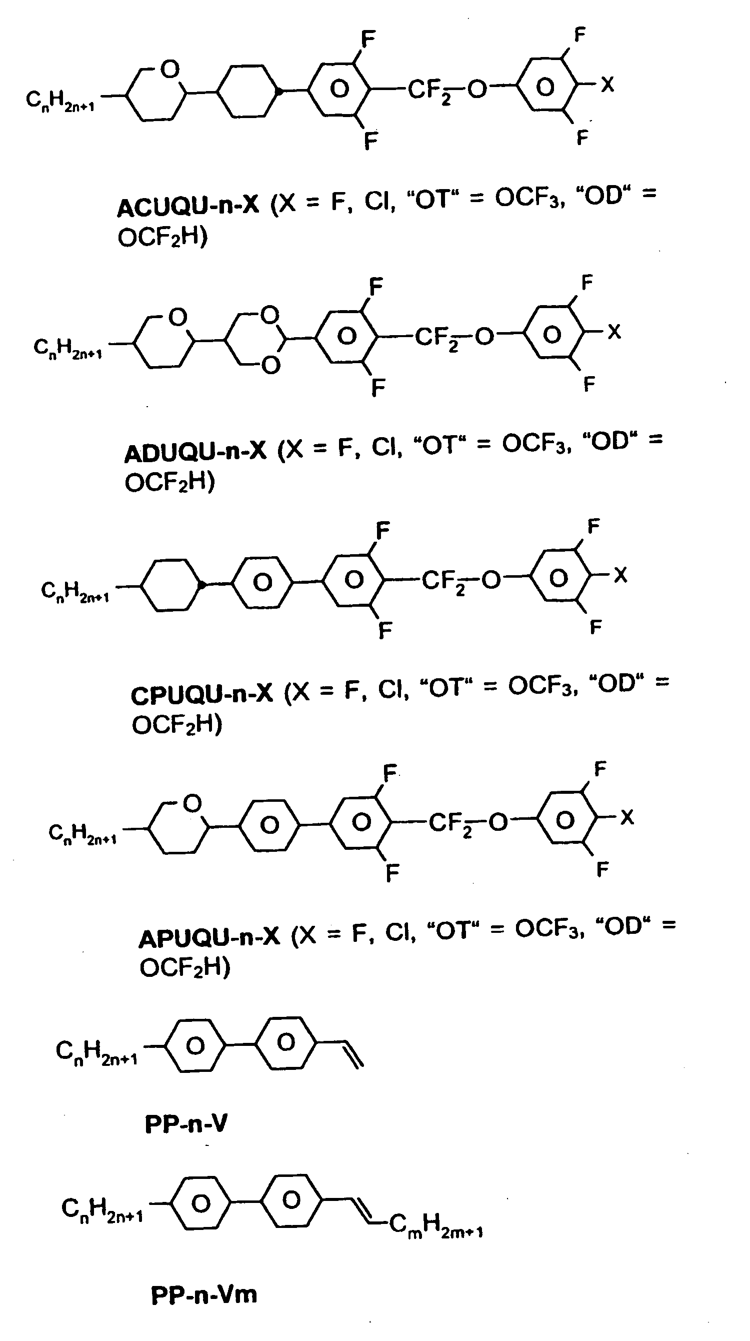

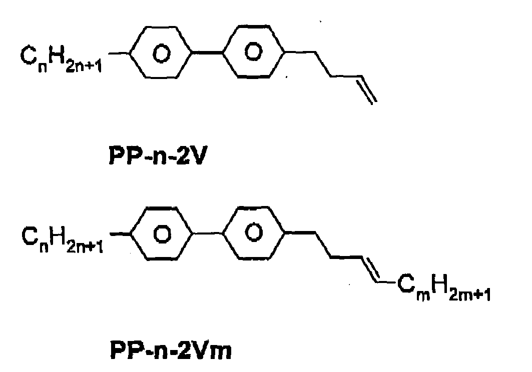

The liquid crystal media according to the instant invention contain preferably
- seven or more, preferably eight or more compounds, preferably of different formulae, selected from the group of compounds of tables A and B and/or
- one or more, more preferably two or more, preferably three or more compounds, preferably of different formulae, selected from the group of compounds of table A and/or
- three or more, more preferably four or more compounds, more preferably five or more compounds, preferably of different formulae, selected from the group of compounds of table B.

### Examples

The examples given in the following are illustrating the present invention without limiting it in any way.
However, the physical properties compositions illustrate to the expert, which properties can be achieved and in which ranges they can be modified. Especially the combination of the various properties, which can be preferably achieved, is thus well defined for the expert.

### Comparative Example 1

A liquid crystal mixture is realized with the composition and properties given in the following table.

| Composition | | | Physical Properties | |
|---|---|---|---|---|
| Compound | | | T(N,I) | = 74.5 °C |
| No. | Abbreviation | Conc. /% | | |
| 1 | PGU-2-F | 3.5 | nₑ (20 °C, 589.3 nm) | = 1.5772 |
| 2 | PGU-3-F | 7.0 | Δn (20 °C, 589.3 nm) | = 0.0972 |
| 3 | CCZU-2-F | 3.0 | | |
| 4 | CCZU-3-F | 11.0 | ε\|\| (20 °C, 1 kHz) | = 12.0 |
| 5 | CC-3-V1 | 13.0 | Δε (20 °C, 1 kHz) | = 8.4 |
| 6 | CC-5-V | 16.0 | | |
| 7 | CCP-V-1 | 2.5 | γ₁ (20 °C) | = 73 mPa · s |
| 8 | CCP-V2-1 | 4.0 | | |
| 9 | CCP-20CF3 | 6.0 | k₁ (20 °C) | = 12.9 pN |
| 10 | CCP-30CF3 | 6.0 | k₃/k₁ (20 °C) | = 0.98 |
| 11 | CCP-40CF3 | 6.0 | | |
| 12 | PUQU-2-F | 7.0 | V₀(20 °C) | = 1.30 V |
| 13 | PUQU-3-F | 7.0 | | |
| 14 | PCH-302 | 8.0 | | |
| Σ | | 100.0 | | |

This mixture has a favourably low value of Δn, a moderately high value of Δε and a moderately low rotational viscosity. Thus it is suited for displays operating in the IPS mode.

### Comparative Example 2

A liquid crystal mixture is realized with the composition and properties given in the following table.

| Composition | | | Physical Properties | |
|---|---|---|---|---|
| Compound | | | T(N,I) | = 80.0 °C |
| No. | Abbreviation | Conc. /% | | |
| 1 | CCP-20CF3 | 8.0 | nₑ (20 °C, 589.3 nm) | = 1.5891 |
| 2 | CCP-30CF3 | 8.0 | Δn (20 °C, 589.3 nm) | = 0.1082 |
| 3 | CGZP-2-OT | 4.0 | | |
| 4 | CCZU-3-F | 13.0 | ε\|\| (20 °C, 1 kHz) | = 14.8 |
| 5 | BCH-3F.F.F | 8.0 | Δε (20 °C, 1 kHz) | = 11.0 |
| 6 | PGU-2-F | 7.0 | | |
| 7 | PGU-3-F | 9.0 | γ₁ (20 °C) | = 95 mPa · s |
| 8 | CC-3-V1 | 12.0 | | |
| 9 | CC-5-V | 18.0 | k₁ (20 °C) | = 12.3 pN |
| 10 | CCGU-3-F | 5.0 | k₃/k₁ (20 °C) | = 0.98 |
| 11 | PUQU-2-F | 3.0 | | |
| 12 | PUQU-3-F | 5.0 | V₀ (20 °C) | = 1.13 V |
| Σ | | 100.0 | | |
| | | | | |

This mixture has a favourably low value of Δn, a moderately high value of Δε and a moderately low rotational viscosity. Thus it is suited for displays operating in the IPS mode.

### Comparative Example 3

A liquid crystal mixture is realized with the composition and properties given in the following table.

| Composition | | | Physical Properties | |
|---|---|---|---|---|
| Compound | | | T(N,I) | = 75.0 °C |
| No. | Abbreviation | Conc. /% | | |
| 1 | PGU-2-F | 9.0 | nₑ (20 °C, 589.3 nm) | = 1.5829 |
| 2 | CDU-2-F | 6.0 | Δn (20 °C, 589.3 nm) | = 0.0997 |
| 3 | CDU-3-F | 6.0 | | |
| 4 | PUQU-2-F | 11.0 | ε\|\| (20 °C, 1 kHz) | = 18.4 |
| 5 | PUQU-3-F | 11.0 | Δε (20 °C, 1 kHz) | = 13.9 |
| 6 | CCZU-2-F | 3.0 | | |
| 7 | CCZU-3-F | 14.0 | γ₁ (20 °C) | = 99 mPa · s |
| 8 | CCZU-5-F | 2.0 | | |
| 9 | CC-5-V | 12.5 | k₁ (20 °C) | = 11.3 pN |
| 10 | CC-3-V1 | 11.0 | k₃/k₁ (20 °C) | = 1.03 |
| 11 | CCP-V2-1 | 12.5 | | |
| 12 | CCPC-33 | 2.0 | V₀ (20 °C) | = 0.95 V |
| Σ | | 100.0 | | |
| | | | | |

This mixture has a favourably low value of Δn, a moderately high value of Δε and a moderately low rotational viscosity. Thus it is suited for displays operating in the IPS mode.

### Comparative Example 4

A liquid crystal mixture is realized with the composition and properties given in the following table.

| Composition | | | Physical Properties | |
|---|---|---|---|---|
| Compound | | | T(N,I) | = 78.5 °C |
| No. | Abbreviation | Conc. /% | | |
| 1 | PGU-2-F | 5.0 | nₑ (20 °C, 589.3 nm) | = 1.6010 |
| 2 | PGU-3-F | 9.0 | Δn (20 °C, 589.3 nm) | = 0.1100 |
| 3 | PUQU-2-F | 7.0 | | |
| 4 | PUQU-3-F | 7.0 | ε\|\| (20 °C, 1 kHz) | = 10.1 |
| 5 | CCP-3F.F.F | 4.0 | Δε (20 °C, 1 kHz) | = 7.0 |
| 6 | CCGU-3-F | 2.0 | | |
| 7 | CC-3-V1 | 16.0 | γ₁ (20 °C) | = 70 mPa · s |
| 8 | CC-4-V | 19.0 | | |
| 9 | CCP-V-1 | 12.0 | k₁ (20 °C) | = 14.0 pN |
| 10 | CCP-V2-1 | 14.0 | k₃/k₁ (20 °C) | = 0.93 |
| 11 | PP-1-2V1 | 5.0 | | |
| Σ | | 100.0 | V₀ (20 °C) | = 1.49 V |
| | | | | |

### Example 1

A liquid crystal mixture is realized with the composition and properties given in the following table.

| Composition | | | Physical Properties | |
|---|---|---|---|---|
| Compound | | | T(N,I) | = 74.5 °C |
| No. | Abbreviation | Conc. /% | | |
| 1 | APUQU-2-F | 10.0 | nₑ (20 °C, 589.3 nm) | = 1.5914 |
| 2 | APUQU-3-F | 10.0 | An (20 °C, 589.3 nm) | = 0.1052 |
| 3 | BCH-32 | 4.0 | | |
| 4 | CC-3-V | 50.0 | ε\|\| (20 °C, 1 kHz) | = 8.0 |
| 5 | CC-3-V1 | 10.0 | Δε (20 °C, 1 kHz) | = 5.0 |
| 6 | PGP-2-3 | 8.0 | | |
| 7 | PGP-2-4 | 8.0 | γ₁ (20°C) | = 52 mPa · s |
| Σ | | 100.0 | | |
| | | | k₁ (20°C) | = 13.3 pN |
| | | | k₃ (20 °C) | = 11.7 pN |
| | | | | |
| | | | V₀ (20 °C) | = 1.71 V |
| | | | V₁₀ (20 °C) | = 1.83 V |

This mixture has a favourable value of Δn, a high value of Δε and a very low rotational viscosity. Thus it is very well suited for displays for monitor application operating e.g. in the TN mode.

### Example 2

A liquid crystal mixture is realized with the composition and properties given in the following table.

| Composition | | | Physical Properties | |
|---|---|---|---|---|
| Compound | | | T(N,I) | = 75.5 °C |
| No. | Abbreviation | Conc. /% | | |
| 1 | APUQU-2-F | 10.0 | nₑ (20 °C, 589.3 nm) = | 1.5963 |
| 2 | APUQU-3-F | 10.0 | Δn (20 °C, 589.3 nm) | = 0.1097 |
| 3 | CC-3-V | 45.0 | | |
| 4 | CC-3-V1 | 15.0 | ε\|\| (20 °C, 1 kHz) | = 8.0 |
| 5 | PGP-2-3 | 10.0 | Δε (20 °C, 1 kHz) | = 5.0 |
| 6 | PGP-2-4 | 10.0 | | |
| Σ | | 100.0 | γ₁ (20 °C) | = 54 mPa · s |
| | | | V₁₀ (20 °C) | = 1.87 V |
| | | | V₉₀ (20 °C) | = 2.71 V |

This mixture has a favourable value of Δn, a high value of Δε and a low rotational viscosity. Thus it is very well suited for displays for monitor application operating e.g. in the TN mode.

### Example 3

A liquid crystal mixture is realized with the composition and properties given in the following table.

| Composition | | | Physical Properties | |
|---|---|---|---|---|
| Compound | | | T(N,I) | °C = 71.0 °C |
| No. | Abbreviation | Conc. /% | | |
| 1 | APUQU-2-F | 10.0 | nₑ (20 °C, 589.3 nm) | = 1.5893 |
| 2 | APUQU-3-F | 10.0 | Δn (20 °C, 589.3 nm) | = 0.1037 |
| 3 | CC-3-V | 52.0 | | |
| 4 | CC-3-V1 | 10.0 | ε\|\| (20 °C, 1 kHz) | = 8.1 |
| 5 | PGP-2-3 | 9.0 | Δε (20 °C, 1 kHz) | = 5.1 |
| 6 | PGP-2-4 | 9.0 | | |
| Σ | | 100.0 | γ₁ (20 °C) | = 53 mPa · s |
| | | | | |
| | | | k₁ (20 °C) | **=** 12.9 pN |
| | | | k₃/k₁ (20 °C) | = 0.89 |
| | | | | |
| | | | V₀ (20 °C) | = 1.68 V |

This mixture has a favourable value of Δn, a high value of Δε and a low rotational viscosity. Thus it is very well suited for displays for monitor application operating e.g. in the TN mode.

### Example 4

A liquid crystal mixture is realized with the composition and properties given in the following table.

| Composition | | | Physical Properties | |
|---|---|---|---|---|
| Compound | | | T(N,I) | = 72.0 °C |
| No. | Abbreviation | Conc. /% | | |
| 1 | APUQU-2-F | 12.0 | nₑ (20 °C, 589.3 nm) | = 1.5978 |
| 2 | APUQU-3-F | 12.0 | Δn (20 °C, 589.3 nm) | = 0.1100 |
| 3 | CC-3-V | 56.0 | | |
| 4 | PGP-2-3 | 10.0 | ε\|\| (20 °C, 1 kHZ) | = 9.5 |
| 5 | PGP-2-4 | 10.0 | Δε (20 °C, 1 kHz) | = 6.3 |
| Σ | | 100.0 | | |
| | | | γ₁ (20 °C) | = 55 mPa · s |
| | | | | |
| | | | k₁ (20 °C) | = 12.5 pN |
| | | | k₃/k₁ (20 °C) | = 0.88 |
| | | | | |
| | | | V₀ (20 °C) | = 1.49 V |
| | | | V₁₀ (20 °C) | = 1.60 V |
| | | | V₉₀ (20 °C) | = 2.35 V |

This mixture has a favourable value of Δn, a high value of Δε and a low rotational viscosity. Thus it is very well suited for displays for monitor application operating e.g. in the TN mode.

### Example 5

A liquid crystal mixture is realized with the composition and properties given in the following table.

| Composition | | | Physical Properties | |
|---|---|---|---|---|
| Compound | | | T(N,I) = 73.5 °C | |
| No. | Abbreviation | Conc. /% | | |
| 1 | APUQU-2-F | 10.0 | nₑ (20 °C, 589.3 nm) | = 1.5960 |
| 2 | APUQU-3-F | 10.0 | Δn (20 °C, 589.3 nm) | = 0.1084 |
| 3 | CC-3-V | 54.0 | | |
| 4 | PGP-2-3 | 7.0 | ε\|\| (20 °C, 1 kHz) | = 9.2 |
| 5 | PGP-2-4 | 7.0 | Δε (20 °C, 1 kHz) | = 6.1 |
| 6 | CCGU-3-F | 7.0 | | |
| 7 | PP-1-2V1 | 5.0 | γ₁ (20 °C) | = 57 mPa · s |
| Σ | | 100.0 | | |
| | | | k₁ (20 °C) | **=** 12.8 pN |
| | | | k₃/k₁ (20 °C) | **=** 0.91 |
| | | | | |
| | | | V₀ (20 °C) | = 1.53 V |
| | | | V₁₀ (20 °C) | = 1.70 V |
| | | | V₉₀ (20 °C) | **=** 2.49 V |

This mixture has a favourable value of Δn, a moderately high value of Δε and a rather low rotational viscosity. Thus it is very well suited for displays operating in the TN mode.

## Claims

1. Liquid crystal medium, **characterised in that** it comprises
- a dielectrically neutral component, component A, comprising a dielectrically neutral compound of formula I 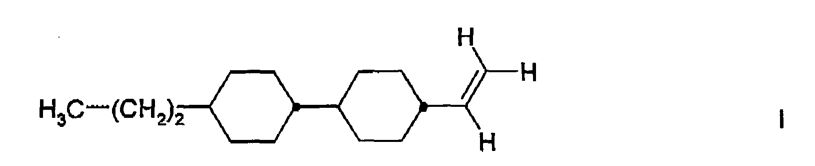 and
- a dielectrically positive component, component B, comprising one or more dielectrically positive compounds having a dielectric anisotropy of more than 3
and **in that** the concentration of the component A in the medium is in the range from 45 % to 60 %
and the condition that media comprising 3 % or 4 % of the compound of the formula 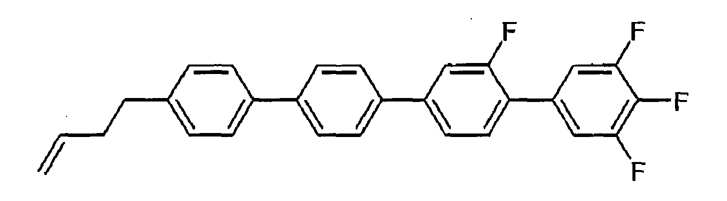 are excluded.

2. Liquid crystal medium according to claim 1, **characterised in that** the concentration of the component A in the medium is in the range from 50 % to 57 %.

3. Liquid crystal medium according to at least one of claims 1 and 2, **characterised in that** the dielectrically positive component, component B comprises one or more compounds selected from the group of compounds of formulae II and III 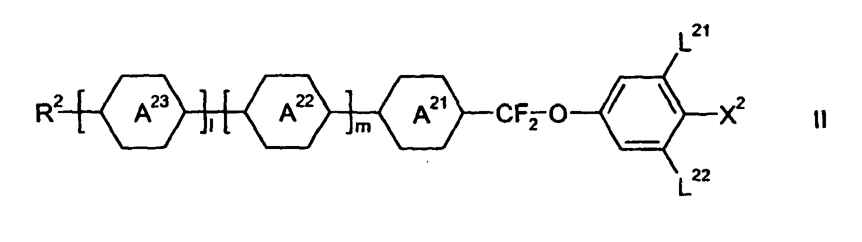 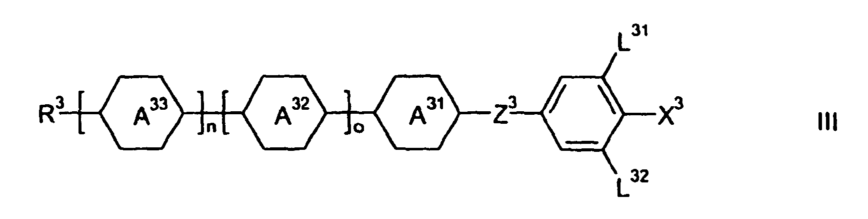 wherein
R² and R³ are, independently of each other, alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, 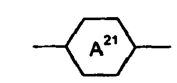 to 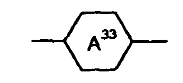 are, independently of each other, 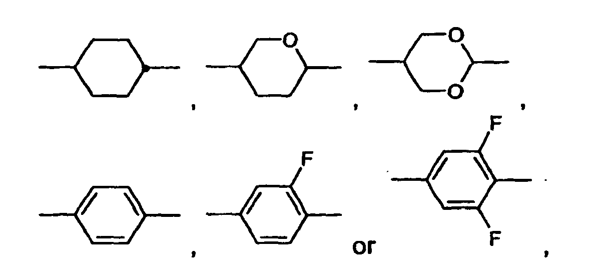
L²¹, L²², L³¹ and L³², are, independently of each other, H or F,
X² and X³ are, independently of each other, halogen, halogenated alkyl or alkoxy with 1 to 3 C-atoms or halogenated alkenyl or alkenyloxy with 2 or 3 C-atoms,
Z³ is -CH₂CH₂-, -CF₂CF₂-, -COO-, trans- -CH=CH-, trans--CF=CF-, -CH₂O- or a single bond, and
I, m, n and O are, independently of each other, 0 or 1.

4. Liquid crystal medium according to at least one of claims 1 to 3, **characterised in that** it comprises one or more compounds of formula II, as given in claim 3.

5. Liquid crystal medium according to at least one of claims 1 to 4, **characterised in that** it comprises one or more compounds of formula III, as given in claim 3.

6. Liquid crystal medium according to at least one of claims 1 to 5, **characterised in that** it comprises one or more dielectrically neutral compounds of formula IV 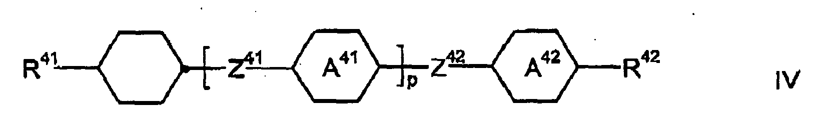 wherein
compounds of formula I are excluded from formula IV,
R⁴¹ and R⁴², independently of each other have the meaning given for R² under formula II above, 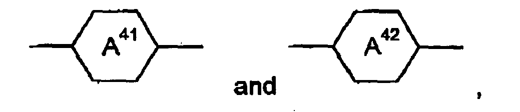 independently of each other, and in case 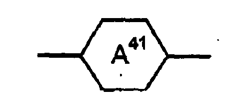 is present twice, also these, independently of each other, are 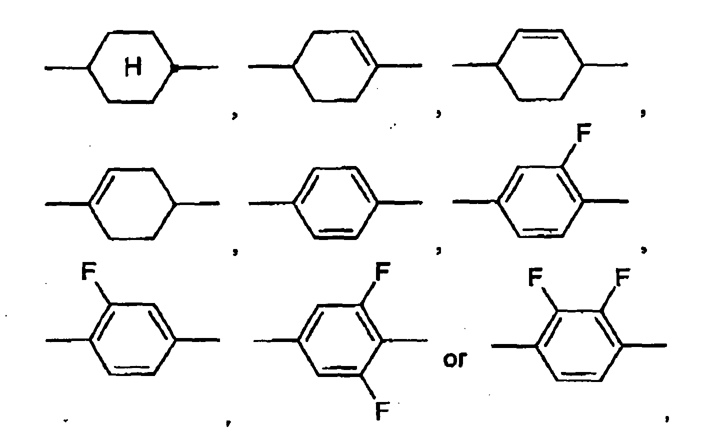
Z⁴¹ and Z⁴² are, independently of each other, and in case Z⁴¹ is present twice, also these independently of each other, -CH₂CH₂-, -COO-, trans- -CH=CH-, trans- -CF=CF-, -CH₂O- -CF₂O- or a single bond, and
p is 0, 1 or 2.

7. Liquid crystal medium according to at least one of claims 1 to 6, **characterised in that** it comprises one or more compounds of formula VI 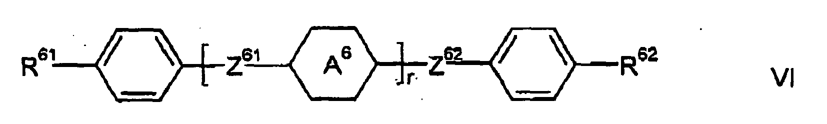 wherein
R⁶¹ and R⁶², independently of each other have the meaning given for R² under formula II in claim 3, 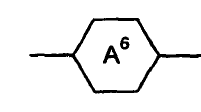 and in case it is occurring twice in each occurrence independently of each other, is 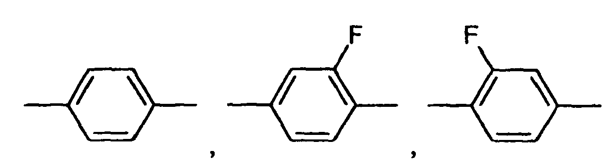 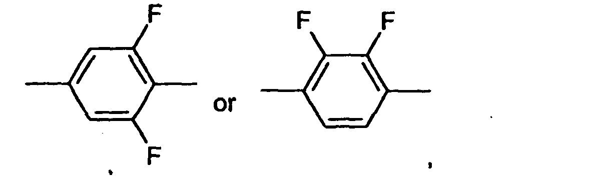
Z⁶¹ and Z⁶² are, independently of each other, and in case Z⁶¹ is present twice, also these independently of each other, -CH₂CH₂-, -COO-, trans- -CH=CH-, trans- -CF=CF-, -CH₂O-, -CF₂O- or a single bond, and
r is 0, 1 or 2.

8. Liquid crystal display, **characterised in that** it comprises a liquid crystal medium according to at least one of claims 1 to 7.

9. Liquid crystal display according to claim 8, **characterised in that** it is addressed by an active matrix.

10. Use of a liquid crystal medium according to at least one of claims 1 to 7 in a liquid crystal display.

## Patentansprüche

1. Flüssigkristallmedium, **dadurch gekennzeichnet, dass** es
- eine dielektrisch neutrale Komponente, Komponente A, enthaltend eine dielektrisch neutrale Verbindung der Formel 1 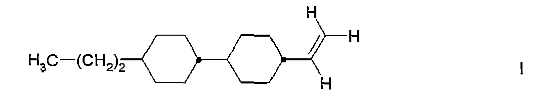 und
- eine dielektrisch positive Komponente, Komponente B, enthaltend eine oder mehrere dielektrisch positive Verbindungen mit einer dielektrischen Anisotropie von mehr als 3
enthält und dass die Konzentration der Komponente A in dem Medium im Bereich von 45 % bis 60 % liegt,
und die Bedingung, dass Medien enthaltend 3 % oder 4 % der Verbindung der Formel 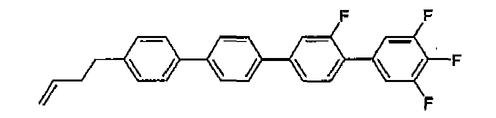 ausgenommen sind.

2. Flüssigkristallmedium nach Anspruch 1, **dadurch gekennzeichnet, dass** die Konzentration der Komponente A in dem Medium im Bereich von 50 % bis 57 % liegt.

3. Flüssigkristallmedium nach mindestens einem der Ansprüche 1 und 2, **dadurch gekennzeichnet, dass** die dielektrisch positive Komponente, Komponente B, eine oder mehrere Verbindungen ausgewählt aus der Gruppe der Verbindungen der Formeln II und III 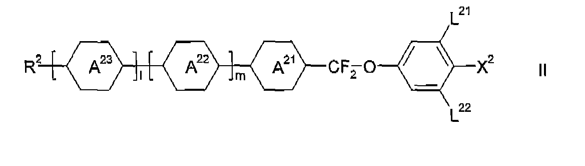 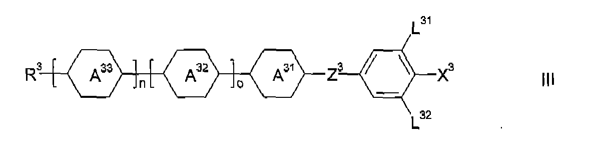 enthält, worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 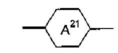 bis 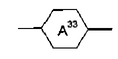 unabhängig voneinander 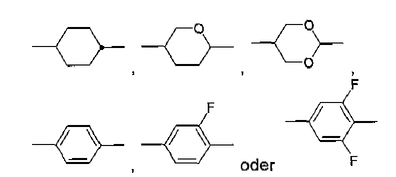 bedeuten,
L²¹, L²², L³¹ und L³² unabhängig voneinander H oder F bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen bedeuten,
Z³ -CH₂CH₂-, -GF₂CF₂-, -COO-, trans- CH=CH-, trans--CF=CF-, -CH₂O- oder eine Einfachbindung bedeutet und
I, m, n und o unabhängig voneinander 0 oder 1 bedeuten.

4. Flüssigkristallmedium nach mindestens einem der Ansprüche 1 bis 3, **dadurch gekennzeichnet, dass** es eine oder mehrere Verbindungen der Formel II, wie in Anspruch 3 angegeben, enthält.

5. Flüssigkristallmedium nach mindestens einem der Ansprüche 1 bis 4, **dadurch gekennzeichnet, dass** es eine oder mehrere Verbindungen der Formel III, wie in Anspruch 3 angegeben, enthält.

6. Flüssigkristallmedium nach mindestens einem der Ansprüche 1 bis 5, **dadurch gekennzeichnet, dass** es eine oder mehrere dielektrisch neutrale Verbindungen der Formel IV 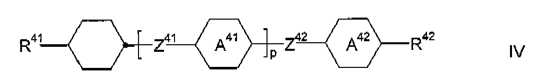 enthält, worin
Verbindungen der Formel I aus der Formel IV ausgeschlossen sind,
R⁴¹ und R⁴² unabhängig voneinander die oben unter Formel II für R² angegebene Bedeutung besitzen, 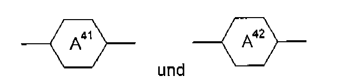 unabhängig voneinander, und für den Fall, dass 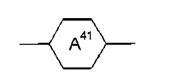 zweifach vorhanden ist, auch diese unabhängig voneinander, 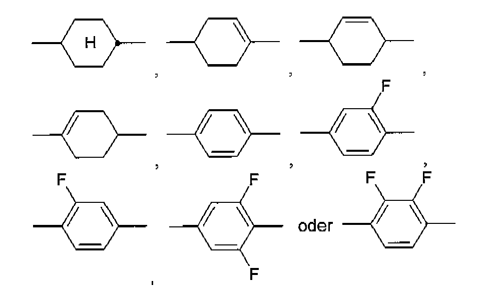 bedeuten,
Z⁴¹ und Z⁴² unabhängig voneinander, und für den Fall, dass Z⁴¹ zweimal vorhanden ist, auch diese unabhängig voneinander, -CH₂CH₂-, -COO-, trans- -CH=CH-, trans--CF=CF-, -CH₂O-, -CF₂O- oder eine Einfachbindung bedeuten und
p 0, 1 oder 2 bedeutet.

7. Flüssigkristallmedium nach mindestens einem der Ansprüche 1 bis 6, **dadurch gekennzeichnet, dass** es eine oder mehrere Verbindungen der Formel VI 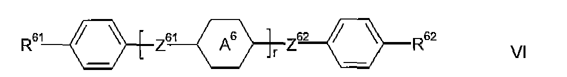 enthält, worin
R⁶¹ und R⁶² unabhängig voneinander die in Anspruch 3 unter Formel II für R² angegebene Bedeutung besitzen, 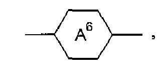 und für den Fall, dass es zweimal auftritt, bei jedem Auftreten unabhängig voneinander, 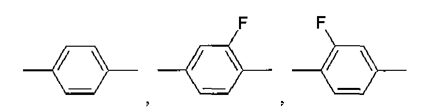 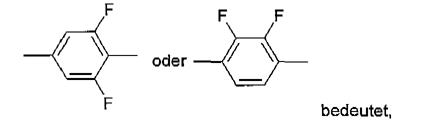
Z⁶¹ und Z⁶² unabhängig voneinander, und für den Fall, dass Z⁶¹ zweimal vorhanden ist, auch diese unabhängig voneinander, -CH₂CH₂-, -COO-, trans- -CH=CH-, trans-CF=CF-, -CH₂O-, -CF₂O- oder eine Einfachbindung bedeuten und
r 0, 1 oder 2 bedeutet.

8. Flüssigkristalldisplay, **dadurch gekennzeichnet, dass** es ein Flüssigkristallmedium nach mindestens einem der Ansprüche 1 bis 7 enthält.

9. Flüssigkristalldisplay nach Anspruch 8, **dadurch gekennzeichnet, dass** es durch eine Aktivmatrix angesteuert wird.

10. Verwendung eines Flüssigkristallmediums nach mindestens einem der Ansprüche 1 bis 7 in einem Flüssigkristalldisplay.

## Revendications

1. Milieu cristallin liquide, **caractérisé en ce qu'**il comprend
- un composé diélectriquement neutre, composé A, comprenant un composé diélectriquement neutre de la formule I 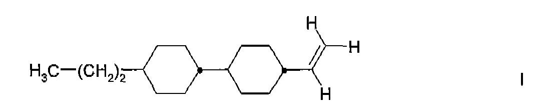 et
- un composé diélectriquement positif, composé B, comprenant un ou plusieurs composés diélectriquement positifs ayant une anisotropie diélectrique supérieurs à 3
et **en ce que** la concentration du composé A dans le milieu est dans la plage de 45 % à 60 %
et la condition que des milieux comprenant 3 % ou 4 % du composé de la formule 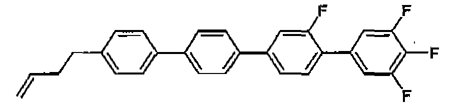 sont exclus.

2. Milieu cristallin liquide selon la revendication 1, **caractérisé en ce que** la concentration du composé A dans le milieu est dans la plage de 50 % à 57 %.

3. Milieu cristallin liquide selon au moins l'une des revendications 1 et 2, **caractérisé en ce que** le composé diélectriquement positif, composé B, comprend un ou plusieurs composés choisis parmi le groupe des composés des formules II et III 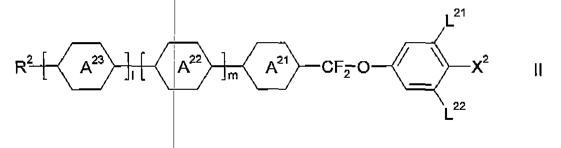 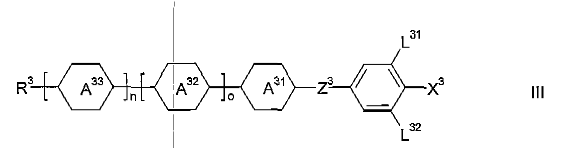 dans lesquelles
R² et R³ sont, indépendamment l'un de l'autre, alkyle, alcoxy, alkyle fluoré ou alcoxy fluoré avec 1 à 7 atomes de C, alkényle, alkényloxy, alcoxyalkyle ou alkényle fluoré avec 2 à 7 atomes de C, 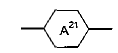 à 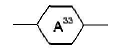 sont, indépendamment les uns des autres, 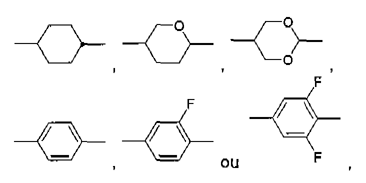
L²¹, L²², L³¹ et L³², sont, indépendamment les uns des autres, H ou F,
X² et X³ sont, indépendamment l'un de l'autre, halogène, alkyle ou alcoxy halogéné avec 1 à 3 atomes de C ou alkényle ou alkényloxyhalogéné avec 2 ou 3 atomes de C,
Z³ est -CH₂CH₂-, -CF₂CF₂-, -COO-, trans- -CH=CH-, trans-CF=CF-, -CH₂O- ou une liaison simple, et
I, m, n et o sont, indépendamment les uns des autres, 0 ou 1.

4. Milieu cristallin liquide selon au moins l'une des revendications 1 à 3, **caractérisé en ce qu'**il comprend un ou plusieurs composés de la formule II, comme donnée dans la revendication 3.

5. Milieu cristallin liquide selon au moins l'une des revendications 1 à 4, **caractérisé en ce qu**'il comprend un ou plusieurs composés de la formule III, comme donnée dans la revendication 3.

6. Milieu cristallin liquide selon au moins l'une des revendications 1 à 5, **caractérisé en ce qu'**il comprend un ou plusieurs composés diélectriquement neutres de la formule IV 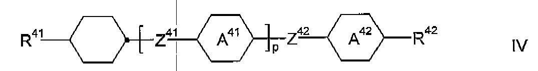 dans laquelle
les composés de la formule I sont exclus de la formule IV,
R⁴¹ et R⁴², indépendamment l'un de l'autre ont la signification donnée pour R² sous la formule II ci avant, 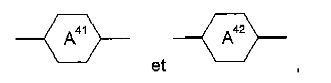 indépendamment l'un de l'autre, et dans le cas où 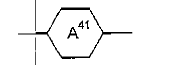 est présent deux fois, ceux-ci sont aussi, indépendamment l'un de l'autre 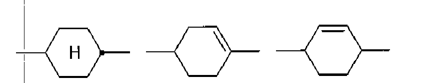 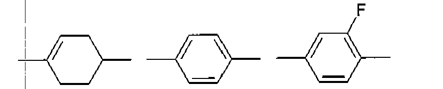 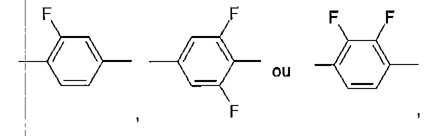
Z⁴¹ et Z⁴² sont, indépendamment l'un de l'autre, et dans le cas où z⁴¹ est présent deux fois, ceux-ci sont également indépendamment l'un de l'autre, -CH₂CH₂-, -COO-, trans--CH=CH-, trans- -CF=CF-, -CH₂O-, -CF₂O- ou une liaison simple, et
p est 0, 1 ou 2.

7. Milieu cristallin liquide selon au moins l'une des revendications 1 à 6, **caractérisé en ce qu'**il comprend un ou plusieurs composés de la formule VI 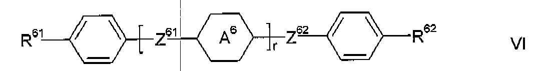 dans laquelle
R⁶¹ et R⁶², indépendamment l'un de l'autre ont la signification donnée pour R² sous la formule II dans la revendication 3, 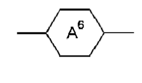 et dans le cas où il apparaît deux fois dans chaque occurrence indépendamment l'un de l'autre, est 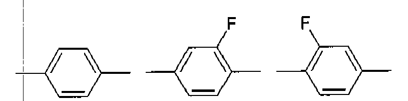 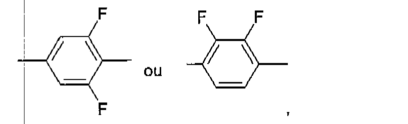
Z⁶¹ et Z⁶² sont, indépendamment l'un de l'autre, et dans le cas où Z⁶¹ est présent deux fois, ceux-ci sont également indépendamment l'un de l'autre, -CH₂CH₂-, -COO-, trans-CH=CH-, trans- -CF=CF-, -CH₂O-, -CF₂O- ou une liaison simple, et
r est 0, 1 ou 2.

8. Affichage à cristaux liquides, **caractérisé en ce qu'**il comprend un milieu cristallin liquide selon au moins l'une des revendications 1 à 7.

9. Affichage à cristaux liquides selon la revendication 8, **caractérisé en ce qu'**il est adressé par une matrice active.

10. Utilisation d'un milieu cristallin liquide selon au moins l'une des revendications 1 à 7 in affichage à cristaux liquides.
